(19) Europäisches Patentamt
European Patent Office
Office européen des brevets

(11) EP 0 676 405 B1

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(51) Int Cl.⁷: **C07F 9/02**

(21) Anmeldenummer: **95810205.5**

(22) Anmeldetag: **28.03.1995**

(54) **Erhöhung der Lagerstabilität von organischen Phosphiten und Phosphoniten**

Increase of the storage stability of organic phosphites and phosphonites

Augmentation de la stabilité au stockage de phosphites et phophonites organiques

(84) Benannte Vertragsstaaten:
**AT BE CH DE ES FR GB IT LI NL SE**

(30) Priorität: **05.04.1994 CH 98594**

(43) Veröffentlichungstag der Anmeldung:
**11.10.1995 Patentblatt 1995/41**

(73) Patentinhaber: **Ciba Specialty Chemicals Holding Inc.**
**4057 Basel (CH)**

(72) Erfinder:
- **Linhart, Helmut**
  **CH-4153 Reinach (CH)**
- **Quotschalla, Udo**
  **CH-64683 Einhausen (CH)**
- **Pauquet, Jean-Roch**
  **CH-4303 Kaiseraugst (CH)**
- **Salathé, Ronald**
  **CH-4312 Magden (CH)**
- **Zingg, Jürg**
  **CH-4153 Reinach (CH)**

(56) Entgegenhaltungen:
**EP-A- 0 143 464** **EP-A- 0 168 721**
**EP-A- 0 576 833** **DD-A- 293 477**
**GB-A- 2 278 362** **US-A- 3 240 751**

- **PATENT ABSTRACTS OF JAPAN vol. 5 no. 194 (C-082) ,10.Dezember 1981 & JP-A-56 113790 (ADEKA ARGUS CHEM CO LTD) 7.September 1981,**
- **CHEMICAL ABSTRACTS, vol. 118, no. 20, 17.Mai 1993 Columbus, Ohio, US; abstract no. 192984, YUKITOMI M ET AL 'Heat- and light-resistant chlororesin compositions' & JP-A-92 255 743 (KYODO YAKUHIN KOGYO K. K.;JAPAN) 10.September 1992**

EP 0 676 405 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Stabilisierung von organischen Phosphiten und Phosphoniten gegen Hydrolyse durch Zusatz von Aminen und säurebindenden Metallsalzen, Zusammensetzungen enthaltend diese drei Komponenten, sowie die Verwendung von Aminen zusammen mit säurebindenden Metallsalzen als Hydrolysestabilisatoren für Phosphite und Phosphonite.

Organische Phosphite und Phosphonite finden vielfach Verwendung als Hitzestabilisatoren für synthetische Polymere.

Herstellung, Lagerung und Einsatz von Phosphiten und Phosphoniten ist jedoch dadurch erschwert, daß diese Verbindungen sehr leicht hydrolisieren. Ein besonderes Problem stellt die Lagerung des Materials bei hoher Luftfeuchtigkeit dar.

Verschiedene Methoden wurden vorgeschlagen, um zu Produkten mit verbesserter Stabilität gegenüber Hydrolyse zu gelangen; dies sind neben Herstellungsverfahren, die zu reineren Produkten führen, und Methoden zur Reinigung der Verbindungen vor allem der Zusatz spezieller Stabilisatoren, die einerseits die Hydrolyseneigung verringern und andererseits keine negativen Wirkungen bei dem späteren Einsatz der Phosphite oder Phosphonite in organischen Polymeren hervorrufen.

Zu den zuletzt genannten Methoden gehört der Zusatz von Aminen als Hydrolysestabilisatoren, wie er beispielsweise in US-A-3 553 298 beschrieben ist Weitere Publikationen zur Stabilisierung von Phosphiten mit Aminen sind JP-A-56-113 75, US-A-3 787 537, US-A-5 342 978, EP-A-168 721 und EP-A-167 969. Empfohlen werden vor allem tertiäre Alkanol- und Alkylamine, Pyridine und Aniline; typische Beispiele sind Triethylamin, Diethanolamin, Triethanolamin, Di- und Triisopropanolamin (TIPA), Tetraisopropanolethylendiamin, Anilin, Phenylendiamin und Hexamethylentetramin. Die Amine werden im allgemeinen in Mengen bis zu ca. 5 Gew.-% (bezogen auf das zu stabilisierende Phosphit) eingesetzt; die Einarbeitung des Amins geschieht durch trockenes Vermahlen oder durch Lösen in oder Vermischen mit der Phosphit-Schmelze und anschließender Kristallisation.

Auch die isolierte Verwendung von säurebindenden Metallsalzen als Hydrolysestabilisator für Phosphite wurde beschrieben (EP-A-576 833, US-A-324075, US-A-5 208 362).

Trotz der hier aufgeführten, bekannten Methoden zur Verbesserung der Hydrolysestabilität von organischen Phosphiten und Phosphoniten besteht Bedarf an einer weiteren Verbesserung.

Es wurde nun gefunden, daß durch kombinierten Zusatz von Aminen und säurebindenden Metallsalzen eine überraschende Verbesserung der Hydrolysestabilität organischer Phosphite und Phosphonite erzielt werden kann. Gegenstand der Erfindung ist daher eine Zusammensetzung enthaltend

(a) 25 bis 99 Gew.-% organisches Phosphit oder Phosphonit,
(b) 0,01 bis 50 Gew.-% organisches Amin und
(c) 0,01 bis 25 Gew.-% säurebindendes Metallsalz,

jeweils bezogen auf das Gesamtgewicht der Zusammensetzung.

Die erfindungsgemäß stabilisierten Phosphite und Phosphonite zeichnen sich durch ihre hervorragende Beständigkeit gegen Hydrolyse aus und weisen eine gute Lagerstabilität auch bei hoher Luftfeuchtigkeit auf.

Von besonderem technischem Interesse ist eine Zusammensetzung enthaltend

(a) 25 bis 99 Gew.-% organisches Phosphit oder Phosphonit,
(b) 0,1 bis 50 Gew.-% organisches Amin und
(c) 0,5 bis 25 Gew.-% säurebindendes Metallsalz,

jeweils bezogen auf das Gesamtgewicht der Zusammensetzung.

Die stabilisierte Zusammensetzung weist häufig einen Gehalt an Phosphit und/oder Phosphonit von 40-99 Gew.-% auf, vorzugsweise beträgt er 70-99 Gew.-%, besonders 80-99 Gew.-%.

Im Allgemeinen enthält das erfindungsgemäß stabilisierte organische Phosphit oder Phosphonit 0,01 bis 25 Gew.-% der Komponente (b). Vorzugsweise enthält das stabilisierte Phosphit oder Phosphonit ein Amin (Komponente [b]) in einer Menge von 0,01 bis 20, besonders 0,05 bis 15, vor allem in einer Menge von 0,1 bis 10 Gew.-%, jeweils bezogen auf das Gesamtgewicht der Zusammensetzung.

Komponente (c) wird in der erfindungsgemäßen Zusammensetzung allgemein in einer Menge von 0,05 bis 15 Gew.-%, besonders 0,1 bis 10 Gew.-%, vor allem 0,1 bis 5 Gew.-%, eingesetzt.

Bevorzugt ist daher eine Zusammensetzung enthaltend 40-99 Gew.-% Komponente (a), 0,01 bis 25 Gew.-% Komponente (b) und 0,05 bis 15 Gew.-% Komponente (c), jeweils bezogen auf das Gesamtgewicht der Zusammensetzung.

Die erfindungsgemäßen Zusammensetzungen enthalten neben den Komponenten (a), (b) und (c) als weitere

Komponenten keine organischen Polymere, beispielsweise solche mit einem Molekulargewicht größer als 5000. Bevorzugt sind Zusammensetzungen, welche neben den Komponenten (a), (b) und (c) keine weiteren Hauptkomponenten oder gegebenenfalls 1 oder 2 weitere Hauptkomponenten enthalten, die ebenfalls als Stabilisatoren, beispielsweise als Antioxidantien, Hitzestabilisatoren oder Lichtschutzmittel, für synthetische Polymere eingesetzt werden können. Besonders bevorzugt sind darunter diejenigen Zusammensetzungen, die keine weiteren Hauptkomponenten enthalten.

Unter weiteren Hauptkomponenten sind hier gegebenenfalls solche Zusätze zu verstehen, die der erfindungsgemäßen Zusammensetzung beigemischt werden und die keine Verunreinigungen darstellen, wie sie durch Synthese oder Lagerung oder teilweise Zersetzung einer der Komponenten (a) bis (c) verursacht werden können.

Die Komponenten (a) bis (c) können jeweils eine Einzelverbindung oder ein Gemisch von Verbindungen sein. Im Fall eines Verbindungsgemisches bezeichnen die Mengenangaben jeweils die Gesamtmenge der eingesetzten Verbindungen der jeweiligen Komponente.

Unter Phosphiten oder organischen Phosphiten sind hier Verbindungen der Formel $P(OR)_3$ zu verstehen, worin die Reste R Kohlenwasserstoffreste sind, welche Heteroatome enthalten können, und darüberhinaus maximal zwei der drei Reste R Wasserstoffatome darstellen können. Heteroatome sind alle Atome mit Ausnahme von Kohlenstoff und Wasserstoff, insbesondere die Atome N, O, F, Si, P, S, Cl, Br, Sn und I.

Phosphonite sind Ester der Phosphonigen Säure mit der Formel $P(OR)_2R$, worin R die oben angegebenen Bedeutungen hat oder Halogen bedeuten kann.

Vorzugsweise handelt es sich bei dem Phosphit oder Phosphonit der Komponente (a) bei 20°C um einen Feststoff, meist um einen kristallinen Feststoff.

Die als Komponente (c) der erfindungsgemäßen Zusammensetzungen eingesetzten säurebindenden Metallsalze sind in der Regel Carbonate, Bicarbonate, Carboxylate, Oxide, Hydroxide, Phosphite, Borate oder entsprechende Mischkristallisate, insbesondere der Metalle Lithium, Natrium, Kalium, Kupfer, Zink, Magnesium, Calcium, Strontium, Barium, Aluminium und/oder Zirkonium, sowie Hydrotalcite oder Zeolithe. Auch der Einsatz von mehreren verschiedenen säurebindenden Metallsalzen ist möglich.

Als erfindungsgemäß einsetzbare säurebindende Metallsalze kommen sowohl natürlich vorkommende Mineralien wie auch synthetisch hergestellte Verbindungen in Betracht. Die Metalle können partiell gegeneinander ausgetauscht sein. Die genannten Metallsalze sind kristallin, teilkristallin oder amorph oder können als getrocknetes Gel vorliegen.

Zweckmäßig werden die Verbindungen der Komponente (c) in pulverisierter Form eingesetzt. Bevorzugt weisen die in dem Pulver enthaltenen Kristallite eine hohe spezifische Oberfläche auf. Diese hohe spezifische Oberfläche kann durch eine entsprechend feine Körnung und/oder einen porösen Aufbau der Kristallite, wie er beispielsweise bei erfindungsgemäß verwendbaren Zeolithen vorliegt, erreicht werden.

Bevorzugt sind solche säurebindenden Metallsalze, welche kein Kristallwasser enthalten oder deren Kristallwasser stark gebunden ist, beispielsweise solche Verbindungen, die bei Erwärmen unter Normaldruck an der Luft auf 150°C, insbesondere auf 200°C, kein Wasser abgeben.

Verbindungen aus der Reihe der Hydrotalcite können durch die allgemeine Formel IX beschrieben werden,

$$M^{2+}{}_{1-x}\bullet M^{3+}{}_{x}\bullet(OH)_2\bullet(A^{n-})_{x/n}\bullet pH_2O \qquad (IX)$$

wobei

- $M^{2+}$ = Mg, Ca, Sr, Ba, Zn, Pb, Sn und/oder Ni ist,
- $M^{3+}$ = Al, B oder Bi ist,
- $A^n$ ein Anion mit der Valenz n darstellt,
- n eine Zahl von 1-4 ist,
- x eine Zahl von 0-0,5 ist,
- p eine Zahl von 0-2 ist und
- A = $OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$,

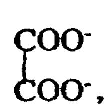

$(CHOHCOO)_2^{2-}$, $(CHOH)_4CH_2OHCOO^-$. $C_2H_4(COO)_2^{2-}$, $(CH_2COO)_2^{2-}$, $CH_3CHOHCOO$-, $SiO_3^{2-}$, $SiO_4^{4-}$, Fe

$(CN)_6^{3-}$, $Fe(CN)_6^{4-}$, $BO_3^{3-}$, $PO_3^{3-}$ oder $HPO_4^{2-}$

darstellt.

Andere Hydrotalcite, die zweckmässig in dem Verfahren, wie oben beschrieben, eingesetzt werden können, sind Verbindungen mit der allgemeinen Formel IXa,

$$M_x^{2+}Al_2(OH)_{2x+6nz}(A^{n-})_2 \bullet pH_2O \qquad \text{(IXa)}$$

wobei in vorliegender Formel IXa $M^{2+}$ wenigstens ein Metall aus der Reihe von Mg und Zn darstellt und Mg bevorzugt ist, $A^{n-}$ ein Anion, beispielsweise aus der Reihe von $CO_3^{2-}$,

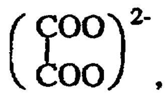

$OH^-$ und $S^{2-}$ darstellt, wobei n die Valenz des Anions ist, p eine positive Zahl, vorzugsweise von 0,5 bis 5, darstellt und x und z positive Zahlen darstellen, wobei x vorzugsweise 2 bis 6 ist und z kleiner als 2 ist.

Bevorzugt sind Verbindungen aus der Reihe der Hydrotalcite der allgemeinen Formel IX,

$$M_{1-x}^{2+} \bullet M_x^{3+} \bullet (OH)_2 \bullet (A^{n-})_{x/n} \bullet pH_2O \qquad \text{(IX)}$$

wobei $M^{2+}$ die Bedeutung von Ca, Mg oder einer festen Lösung von Mg und Zn hat, $A^{n-}$ für $CO_3^{2-}$, $BO_3^{3-}$ oder $PO_3^{3-}$ steht, x eine Zahl von 0 bis 0,5 ist und p eine Zahl von 0 bis 2 ist. Unter diesen Metallsalzen sind insbesondere diejenigen bevorzugt, in denen $M^{3+}$ für ein Aluminiumion steht.

Bevorzugt werden basische Hydrotalcite eingesetzt.

Ganz besonders bevorzugt sind Hydrotalcite entsprechend der summarischen Zusammensetzung

$$Al_2O_3 \cdot 6MgO \cdot CO_2 \cdot 12H_2O, \qquad \text{(IXb)}$$

$$Mg_{4,5}Al_2(OH)_{13} \cdot CO_3 \cdot 3{,}5H_2O, \qquad \text{(IXc)}$$

$$4MgO \cdot Al_2O_3 \cdot CO_2 \cdot 9H_2O, \qquad \text{(IXd)}$$

$$4MgO \cdot Al_2O_3 \cdot CO_2 \cdot 6H_2O, \qquad \text{(IXe)}$$

$$ZnO \cdot 3MgO \cdot Al_2O_3 \cdot CO_2 \cdot 8\text{-}9H_2O \qquad \text{(IXf)}$$

oder

$$ZnO \cdot 3MgO \cdot Al_2O_3 \cdot CO_2 \cdot 5\text{-}6H_2O. \qquad \text{(IXg)}$$

Erfindungsgemäss können weiterhin Zeolithe der allgemeinen Formel (X)

$$M_{x/n}[(AlO_2)_x(SiO_2)_y] \cdot wH_2O \qquad \text{(X)}$$

wobei n die Ladung des Kations M ist und M ein Element der ersten oder zweiten Hauptgruppe, insbesondere Na, K, Mg und/oder Ca,

y: x eine Zahl zwischen 0,8 und 1,2 und
w eine Zahl zwischen 0,5 und 10 ist,

verwendet werden.

Bevorzugt sind basische Zeolithe.

Beispiele für geeignete Zeolithe sind Verbindungen der folgenden summarischen Zusammensetzungen:

$$Na_{12}[(AlO_2)_{12}(SiO_2)_{12}]\cdot 12H_2O$$

$$Ca_{4,5}Na_3[(AlO_2)_{12}(SiO_2)_{12}]\cdot 30H_2O$$

$$K_9Na_3[(AlO_2)_{12}(SiO_2)_{12}]\cdot 27H_2O$$

Unter basischen Metallsalzen, beispielsweise basischen Hydrotalciten oder Zeolithen, sind solche Verbindungen zu verstehen, die in Wasser einen pH größer als 7 bewirken.

Unter den erfindungsgemäß einsetzbaren Carbonaten, Bicarbonaten, Hydroxiden, Phosphiten und Boraten sind insbesondere Magnesium-, Zirkonium- und Calciumcarbonat; Natrium- und Kaliumbicarbonat; Magnesium-, Calcium-, Kupfer-, Zink- und Aluminiumhydroxid; sekundäres und tertiäres Natrium- und Kaliumphosphit; sowie Natrium- und Calciumborat bevorzugt.

Erfindungsgemäss können weiterhin Metalloxide verwendet werden. Bevorzugt sind Oxide zweiwertiger Metalle. Besonders bevorzugt sind Oxide der Metalle der zweiten Haupt- oder Nebengruppe, darunter vor allem Zink-, Calcium- und Magnesiumoxid.

Beispiele von Metallcarboxylaten sind die Metallsalze von gesättigten, ungesättigten oder mit Hydroxylgruppen substituierten aliphatischen Carbonsäuren. Dabei kommen vor allem die Salze von Monocarbonsäuren mit 6 bis 20 C-Atomen, wie beispielsweise Hexansäure, Heptansäure, Octansäure, 2-Ethylhexansäure, Undecansäure, Laurinsäure, Myristinsäure, Palmitinsäure, Stearinsäure, 12-Oxystearinsäure, Oelsäure, Linolsäure oder Ricinolsäure, sowie die Salze von Dicarbonsäuren mit 2 bis 8 C-Atomen, wie beispielsweise Oxalsäure, Malonsäure, Bernsteinsäure, Glutarsäure, Adipinsäure, Pimelinsäure, Korksäure, Azelainsäure, Sebacinsäure, Maleinsäure, Fumarsäure oder Weinsäure in Betracht. Als Salze von Tricarbonsäuren sind weiterhin die Citrate zu erwähnen.

Ebenfalls von Interesse sind die Metallsalze von aromatischen Carbonsäuren wie beispielsweise substituierte Benzoate oder Phthalate.

Bevorzugt sind Metalle aus der Reihe Ba, Sr, Ca, Mg und Zn. Bevorzugte Metallcarboxylate sind beispielsweise Ca- oder Zn-Stearat und Zn- und Ca-Oleat.

Die erfindungsgemäße Zusammensetzung enthält als Amin (b) vorzugsweise ein sterisch gehindertes Amin oder eines der Formel I

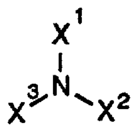

(I)

worin $X^1$ und $X^2$ unabhängig voneinander H, $C_1$-$C_{20}$-Alkyl, durch -O- unterbrochenes und optional durch -OH substituiertes $C_4$-$C_{20}$-Alkyl, wobei ein oder mehrere Ether- und gegebenenfalls Hydroxy-Gruppen vorhanden sein können, oder $C_2$-$C_{20}$-Hydroxyalkyl, und $X^3$ $C_2$-$C_{20}$-Alkyl, durch -O- unterbrochenes und optional durch Hydroxy substituiertes $C_4$-$C_{20}$-Alkyl, $-(CH_2)_m-NX^1X^2$, oder $C_2$-$C_{20}$-Hydroxyalkyl darstellen, oder worin $X^2$ und $X^3$ gemeinsam $C_4$-$C_8$-Alkylen oder durch -O- oder $-NX^1-$ unterbrochenes $C_3$-$C_{12}$-Alkylen wie beispielsweise $-(CH_2)_m-$, $-C_2H_4-O-C_2H_4-$ oder $-C_2H_4-NX^1-C_2H_4-$ darstellen, wobei m eine ganze Zahl aus dem Bereich 4 bis 6 ist, und $X^1$ und $X^2$ die oben angegebenen Bedeutungen haben; oder ein aromatisches Amin der Formel Ia

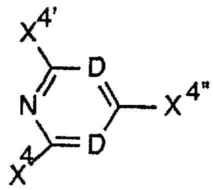

(Ia)

worin D für ein Stickstoffatom oder eine Gruppe $-CX^5-$ steht und worin $X^4$, $X^{4'}$, $X^{4''}$, und $X^5$ unabhängig voneinander Wasserstoff oder $C_1$-$C_4$-Alkyl sind.

Bei dem sterisch gehinderten Amin handelt es sich allgemein um ein cyclisches sterisch gehindertes Amin, insbesondere eine Verbindung aus der Reihe der Derivate von Polyalkylpiperidinen oder -piperazinen, die mindestens eine Gruppe der Formeln II oder III

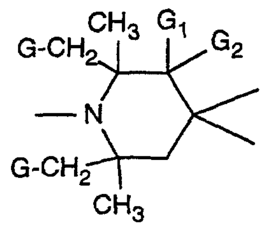

(II)

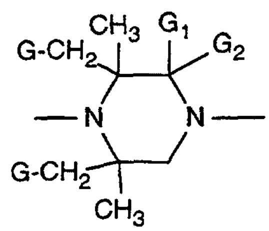

(III)

enthalten, worin G Wasserstoff oder Methyl ist und $G_1$ und $G_2$ Wasserstoff, Methyl oder gemeinsam =O bedeuten; vorzugsweise sind die Polyalkylpiperidingruppen der Formel II in 4-Stellung mit einem oder zwei polaren Substituenten oder einem polaren Spiro-Ringsystem substituiert.

Bevorzugt ist die Verwendung eines sterisch gehinderten Amins.

$X^1$, $X^2$ und $X^3$ umfassen unter anderem jeweils Ethyl, Propyl, Butyl, Pentyl, Hexyl, Heptyl, Octyl, Nonyl, Decyl, Hydroxyethyl, Hydroxypropyl, Hydroxybutyl, Hydroxypentyl, Hydroxyhexyl, Hydroxyheptyl, Hydroxyoctyl, Hydroxynonyl oder Hydroxydecyl.

Vorzugsweise sind $X^1$, $X^2$ und $X^3$ gleich.

Das Amin der Formel I oder Ia kann beispielsweise ein tertiäres Amin sein, besonders bevorzugt ein Tri-$C_2$-$C_4$-alkanolamin wie Triisopropanolamin (= Amin A) oder ein aromatisches Amin wie Trimethyltriazin, beispielsweise 1,3,5-Trimethyl-2,4,6-triazin (= Amin Z), oder auch ein sekundäres Amin wie z.B. Dibutylamin, 2,2,6,6-Tetramethylpiperidin (= Amin X), 4-Hydroxy-2,2,6,6-tetramethylpiperidin (HTMP; = Amin Y) oder Piperazin.

Von Bedeutung ist ein Verfahren, worin als Amin ein tertiäres Amin der Formel I oder Ia oder ein cyclisches sterisch gehindertes Amin eingesetzt wird, das mindestens eine Gruppe der Formeln II oder III enthält, worin G Wasserstoff ist und $G^1$ und $G^2$ Wasserstoff oder gemeinsam einen Substituenten =O bedeuten.

Besonders zweckmäßig werden im erfindungsgemäßen Verfahren Derivate des 2,2,6,6-Tetramethylpiperidins eingesetzt.

Von Bedeutung ist insbesondere die Verwendung der im folgenden unter (a) bis (h) beschriebenen Klassen von Polyalkylpiperidinen, die mindestens eine Gruppe der Formel II oder III, wie oben angegeben, tragen:

(a) Verbindungen der Formel IV

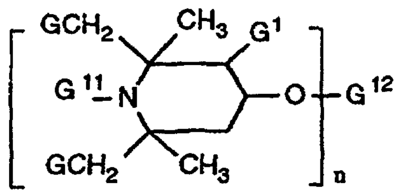

(IV),

worin n eine Zahl von 1 bis 4 bedeutet, G und $G^1$ unabhängig voneinander Wasserstoff oder Methyl bedeuten, $G^{11}$ Wasserstoff, Oxyl, Hydroxyl, $C_1$-$C_{18}$-Alkyl, $C_3$-$C_8$-Alkenyl, $C_3$-$C_8$-Alkinyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_1$-$C_8$-Alkanoyl, $C_3$-$C_5$-Alkenoyl, $C_1$-$C_{18}$-Alkanoyloxy, Benzyloxy, Glycidyl oder eine Gruppe $-CH_2CH(OH)$-Z, worin Z Wasserstoff, Methyl oder Phenyl ist, bedeutet, wobei $G^{11}$ vorzugsweise H, $C_1$-$C_4$-Alkyl, Allyl, Benzyl, Acetyl oder Acryloyl ist und $G^{12}$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wobei die Carbonsäure jeweils im aliphatischen, cycloaliphatischen oder aromatischen Teil mit 1 bis 3 Gruppen $-COOZ^{12}$ substituiert sein kann, worin $Z^{12}$ H, $C_1$-$C_{20}$-Alkyl, $C_3$-$C_{12}$-Alkenyl, $C_5$-$C_7$-Cycloalkyl, Phenyl oder Benzyl ist,

wenn n 2 ist, $C_2$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wobei die Dicarbonsäure jeweils im aliphatischen, cycloaliphatischen oder aromatischen Teil mit 1 oder 2 Gruppen $-COOZ^{12}$ substituiert sein kann,

wenn n 3 ist, einen dreiwertigen Rest einer aliphatischen, cycloaliphatischen oder aromatischen Tricarbonsäure, der im aliphatischen, cycloaliphatischen oder aromatischen Teil mit $-COOZ^{12}$ substituiert sein kann, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Unter den angegebenen Carbonsäureresten sind dabei jeweils Reste der Formel $(-CO)_nR$, wobei die Bedeutung von n oben angegeben ist, und sich die Bedeutung von R aus der angegebenenen Definition ergibt.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $G^{11}$ oder $G^{12}$ z.B. die oben angeführten Gruppen und dazu noch beispielsweise n-Tridecyl, n-Tetradecyl, n-Hexadecyl oder n-Octadecyl darstellen.

Wenn $G^{11}$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$G^{11}$ ist als $C_3$-$C_8$-Alkinyl bevorzugt Propargyl.

Als $C_7$-$C_{12}$-Aralkyl ist $G^{11}$ insbesondere Phenethyl und vor allem Benzyl.

$G^{11}$ ist als $C_1$-$C_8$-Alkanoyl beispielsweise Formyl, Propionyl, Butyryl, Octanoyl, aber bevorzugt Acetyl und als $C_3$-$C_5$-Alkenoyl insbesondere Acryloyl.

Bedeutet $G^{12}$ einen einwertigen Rest einer Carbonsäure, so stellt es beispielsweise einen Essigsäure-, Capronsäure-, Stearinsäure-, Acryl-säure-, Methacrylsäure-, Benzoe- oder $\beta$-(3,5-Di-tert.-butyl-4-hydroxy- phenyl)-propionsäurerest dar.

Bedeutet $G^{12}$ einen einwertigen Silylrest, so stellt es beispielsweise einen Rest der Formel $-(C_jH_{2j})-Si(Z')_2Z''$ dar, worin j eine ganze Zahl aus dem Bereich von 2 bis 5, und Z' und Z'' unabhängig voneinander $C_1$-$C_4$-Alkyl oder $C_1$-$C_4$-Alkoxy bedeuten.

Bedeutet $G^{12}$ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $G^{12}$ einen dreiwertigen Rest einer Tricarbonsäure dar, so bedeutet es z.B. einen Trimellitsäure-, Citronensäure- oder Nitrilotriessigsäurerest.

Stellt $G^{12}$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $G^{12}$ einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel IV, worin G Wasserstoff ist, $G^{11}$ Wasserstoff oder Methyl ist, n 2 ist und $G^{12}$ der Diacylrest einer aliphatischen Dicarbonsäure mit 4-12 C-Atomen ist.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy-1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

(b) Verbindungen der Formel (V)

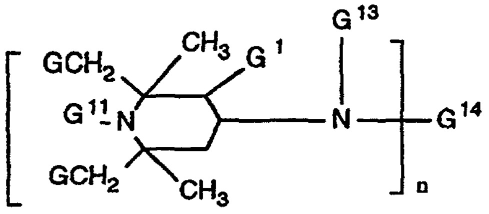

(V)

worin n die Zahl 1 oder 2 bedeutet, G, $G^1$ und $G^{11}$ die unter (a) angegebene Bedeutung haben,
$G^{13}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-Alkenoyl, Benzoyl oder eine Gruppe der Formel

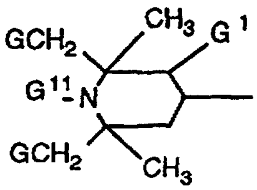

ist und
$G^{14}$, wenn n 1 ist, Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel $-CH_2-CH(OH)-Z$ oder der Formel -CONH-Z ist, worin Z Wasserstoff, Methyl oder Phenyl bedeutet;
wenn n 2 ist, $C_2$-$C_{12}$-Alkylen, $C_6$-$C_{12}$-Arylen, Xylylen, eine $-CH_2-CH(OH)-CH_2$-Gruppe oder eine Gruppe $-CH_2-CH(OH)-CH_2-O-D-O-$ bedeutet, worin D $C_2$-$C_{10}$-Alkylen, $C_6$-$C_{15}$-Arylen, $C_6$-$C_{12}$-Cycloalkylen ist, oder vorausgesetzt, daß $G^{13}$ nicht Alkanoyl, Alkenoyl oder Benzoyl bedeutet, $G^{14}$ auch 1-Oxo-$C_2$-$C_{12}$-alkylen, einen zweiwertigen Rest einer aliphatischen, cycloaliphatischen oder aromatischen Dicarbonsäure oder Dicarbaminsäure oder auch die Gruppe -CO- bedeuten kann, oder,
wenn n 1 ist, $G^{13}$ und $G^{14}$ zusammen den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter (a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $G^{13}$ insbesondere Phenylethyl oder vor allem Benzyl. Als $C_2$-$C_5$-Hydroxyalkyl ist $G^{13}$ insbesondere 2-Hydroxyethyl oder 2-Hydroxypropyl.

G13 ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $G^{14}$ $C_2$-$C_8$-Alkenyl, dann handelt es sich z.B. um Allyl, Methallyl, 2-Butenyl, 2-Pentenyl, 2-Hexenyl oder 2-Octenyl.

$G^{14}$ als mit einer Hydroxy-, Cyano-, Alkoxycarbonyl- oder Carbamidgruppe substituiertes $C_1$-$C_4$-Alkyl kann z. B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist insbesondere Cyclohexylen zu nennen.

Bevorzugt sind Verbindungen der Formel V, worin n 1 oder 2 ist, G Wasserstoff ist, $G^{11}$ Wasserstoff oder Methyl ist, $G^{13}$ Wasserstoff, $C_1$-$C_{12}$-Alkyl oder eine Gruppe der Formel

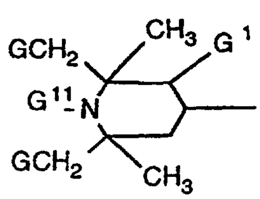

ist und $G^{14}$ im Fall von n=1 Wasserstoff oder $C_1$-$C_{12}$-Alkyl ist, und im Fall von n=2 $C_2$-$C_8$-Alkylen oder 1-Oxo-$C_2$-$C_8$-alkylen ist.

Beispiele für Polyalkylpiperidin-Verbindungen dieser Klasse sind folgende Verbindungen:

37) N,N'-Bis-(2,2,6,6-tetramethylpiperidin-4-yl)-hexamethylen-1,6-diamin

38) N,N'-Bis-(2,2,6,6-tetramethylpiperidin-4-yl)-hexamethylen-1,6-di-acetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpipendin-4-yl)-β-aminodipropionsäure-di-(2,2,6,6-tetramethylpiperidin-4-yl)-ester
46) Die Verbindung der Formel

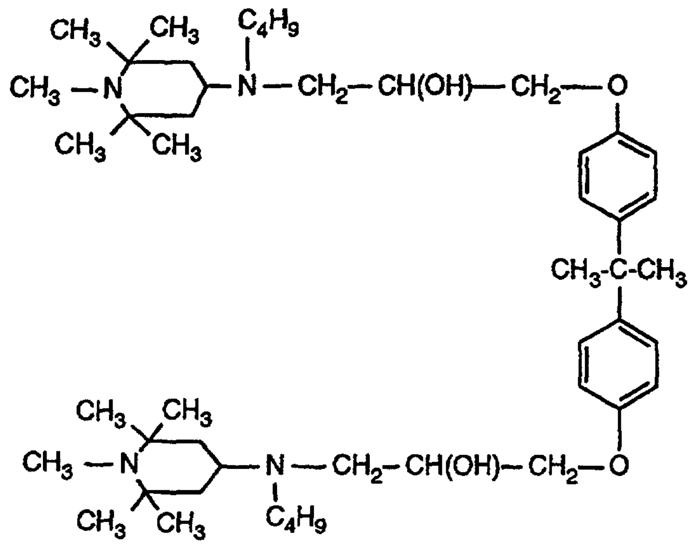

47) 4-(Bis-2-hydroxyethyl-amino)-1,2,2,6,6-pentamethylpiperidin
48) 4-(3-Methyl-4-hydroxy-5-tert.-butyl-benzoesäureamido)-2,2,6,6-tetra-methylpiperidin
49) 4-Methacrylamido-1,2,2,6,6-pentamethylpiperidin

(c) Verbindungen der Formel (VI)

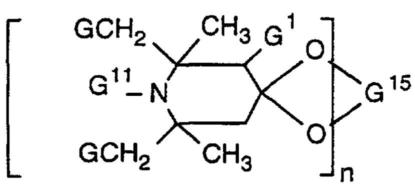

(VI)

worin n die Zahl 1 oder 2 bedeutet, G, $G^1$ und $G^{11}$ die unter (a) angegebene Bedeutung haben und $G^{15}$, wenn n 1 ist, $C_2$-$C_8$-Alkylen oder -Hydroxyalkylen oder $C_4$-$C_{22}$-Acyloxyalkylen, wenn n 2 ist, die Gruppe $(-CH_2)_2C(CH_2-)_2$ bedeutet.

Bedeutet $G^{15}$ $C_2$-$C_8$-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$-$C_{22}$-Acyloxyalkylen bedeutet $G^{15}$ z.B. 2-Ethyl-2-acetoxymethylpropylen.

Beispiele für Polyalkylpiperidin-Verbindungen dieser Klasse sind folgende Verbindungen:

50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8,10,10-tetramethyl-1,5-dioxaspiro[5.5]-undecan
55) 2,2,6,6-Tetramethylpiperidin-4-spiro-2'-(1',3'-dioxan)-5'-spiro-5''-(1'',3''-dioxan)-2''-spiro-4'''-(2''',2''',6''',6'''-

tetramethylpiperidin);

(d) Verbindungen der Formeln VIIA, VIIB und VIIC, wobei Verbindungen der Formel VIIC bevorzugt sind,

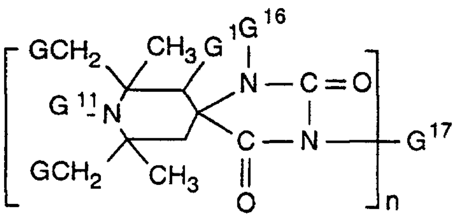

(VIIA)

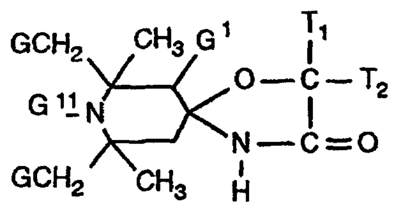

(VIIB)

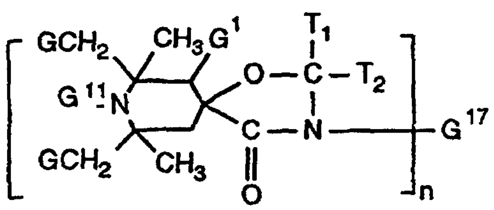

(VIIC)

worin n die Zahl 1 oder 2 bedeutet, G, $G^1$ und $G^{11}$ die unter (a) angegebene Bedeutung haben, $G^{16}$ Wasserstoff, $C_1$-$C_{12}$-Alkyl, Allyl, Benzyl, Glycidyl oder $C_2$-$C_6$-Alkoxyalkyl ist und $G^{17}$, wenn n 1 ist, Wasserstoff, $C_1$-$C_{12}$-Alkyl, $C_3$-$C_5$-Alkenyl, $C_7$-$C_9$-Aralkyl, $C_5$-$C_7$ Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)_p$-COO-Q oder der Formel $-(CH_2)_p$-O-CO-Q ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2$-CH(OH)-$CH_2$-O-D-O-$CH_2$-CH(OH)-$CH_2$-, worin D $C_2$-$C_{10}$ Alkylen, $C_6$-$C_{15}$-Arylen, $C_6$-$C_{12}$ Cycloalkylen ist, oder eine Gruppe $-CH_2CH(OZ')CH_2-(OCH_2-CH(OZ')CH_2)_2$- bedeutet, worin Z' Wasserstoff, $C_1$-$C_{18}$-Alkyl, Allyl, Benzyl, $C_2$-$C_{12}$-Alkanoyl oder Benzoyl ist,
$T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder $T_1$ und $T_2$ zusammen mit dem sie bindenden C-Atom einen $C_5$-$C_{14}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $G^{17}$ $C_3$-$C_5$-Alkenyl dar, so bedeutet es z.B. 1-Propenyl, Allyl, Methallyl, 2-Butenyl oder 2-Pentenyl.

Als $C_7$-$C_9$-Aralkyl sind $G^{17}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $G^{17}$ $C_2$-$C_4$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $G^{17}$, $T_1$ und $T_2$ insbesondere Phenyl, α- oder β-Naphthyl, die gegebenenfalls mit

Halogen oder $C_1$-$C_4$-Alkyl substituiert sind.

Stellt $G^{17}$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$-Alkenylen bedeutet $G^{17}$ insbesondere 2-Butenylen, 2-Pentenylen oder 3-Hexenylen.

Bedeutet $G^{17}$ $C_6$-$C_{12}$ Arylen, so stellt es beispielsweise o-, m- oder p-Phenylen, 1,4-Naphthylen oder 4,4'-Diphenylen dar.

Bedeutet Z' $C_2$-$C_{12}$ Alkanoyl, so stellt es beispielsweise Propionyl, Butyryl, Octanoyl, Dodecanoyl, aber bevorzugt Acetyl dar.

D hat als $C_2$-$C_{10}$ Alkylen, $C_6$-$C_{15}$ Arylen oder $C_6$-$C_{12}$ Cycloalkylen die unter (b) angegebene Bedeutung.

Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60)1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro- [4.5]decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro[5.1.11.2]-heneicosan
64) 2-Butyl-7,7,9,9-tetramethyl-1-oxa-4,8-diaza-3-oxo-spiro-[4,5]decan

und bevorzugt:
65) 8-Acetyl-3-dodecyl-1,3,8-triaza-7,7,9,9-tetramethylspiro[4,5]-decan-2,4-dion
oder die Verbindungen der folgenden Formeln:

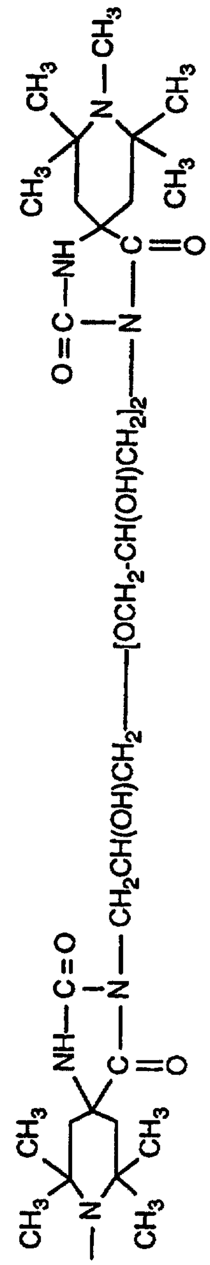

66)

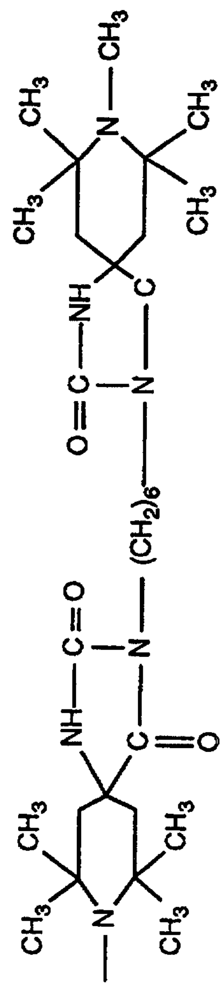

67)

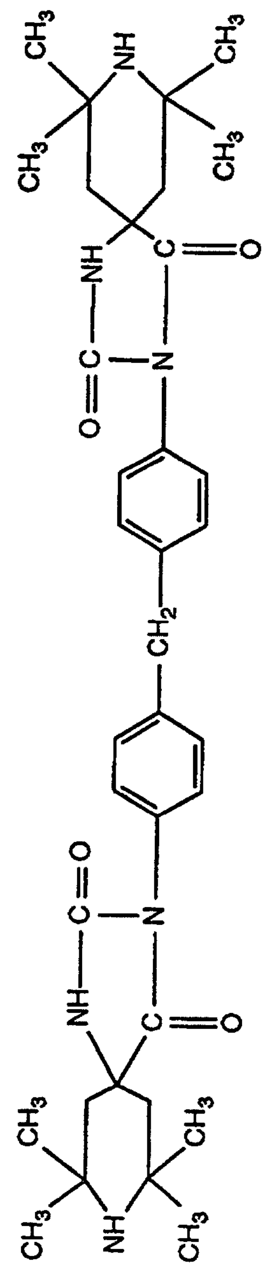

68)

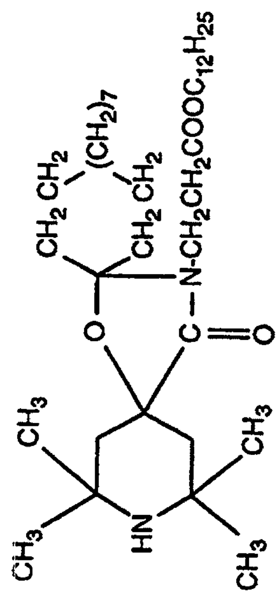

69)

(e) Verbindungen der Formel VIII, die ihrerseits bevorzugt sind,

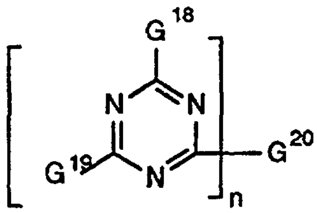

(VIII),

worin n die Zahl 1 oder 2 ist und $G^{18}$ eine Gruppe einer der Formeln

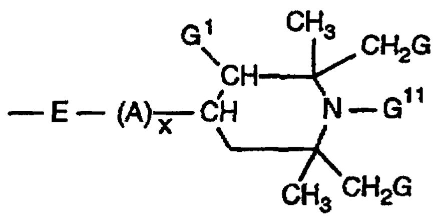

oder

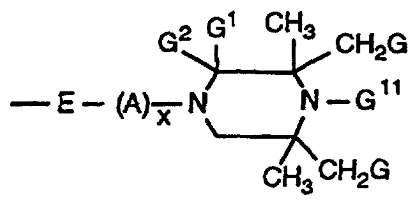

bedeutet, worin G und $G^{11}$ die unter (a) angegebene Bedeutung haben und $G^1$ und $G^2$ Wasserstoff, Methyl oder gemeinsam einen Substituenten =O bedeuten,
E -O- oder -$NG^{13}$- ist, A $C_2$-$C_6$-Alkylen oder -$(CH_2)_3$-O- und x eine der Zahlen O oder 1 bedeuten,
$G^{13}$ Wasserstoff, $C_1$-$C_{12}$-Alkyl, $C_2$-$C_5$-Hydroxyalkyl oder $C_5$-$C_7$-Cycloalkyl darstellt, $G^{19}$ gleich $G^{18}$ oder eine der Gruppen -$NG^{21}G^{22}$, -$OG^{23}$, -$NHCH_2OG^{23}$ oder -$N(CH_2OG^{23})_2$ ist,
$G^{20}$, wenn n = 1 ist, gleich $G^{18}$ oder $G^{19}$, und wenn n = 2 ist, eine Gruppe -E-B-E- ist, worin B $C_2$-$C_8$-Alkylen oder durch 1 oder 2 Gruppen -N($G^{21}$)- unterbrochenes $C_2$-$C_8$-Alkylen bedeutet,
$G^{21}$ $C_1$-$C_{12}$-Alkyl, Cyclohexyl, Benzyl oder $C_1$-$C_4$-Hydroxyalkyl oder eine Gruppe der Formel

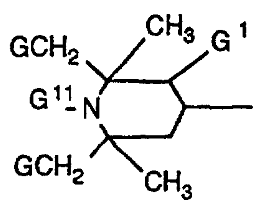

ist, $G^{22}$ $C_1$-$C_{12}$ Alkyl, Cyclohexyl, Benzyl, $C_1$-$C_4$ Hydroxyalkyl und $G^{23}$ Wasserstoff, $C_1$-$C_{12}$ Alkyl oder Phenyl bedeuten oder $G^{21}$ und $G^{22}$ zusammen $C_4$-$C_5$-Alkylen oder -Oxaalkylen, beispielsweise

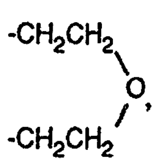

oder eine Gruppe der Formel

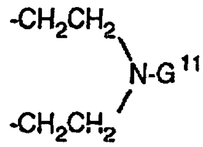

sind, oder $G^{21}$ eine Gruppe der Formel

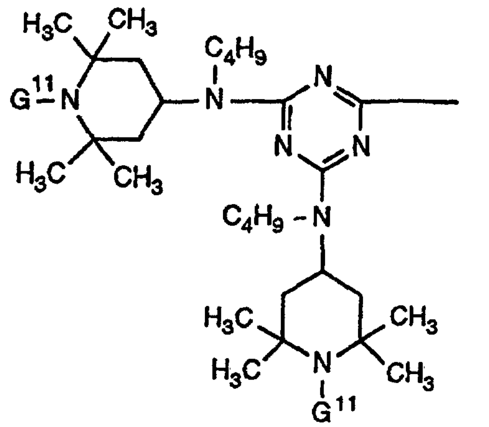

bedeutet.

Bedeuten etwaige Substituenten $C_1$-$C_{12}$-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$ Alkylen, so stellt es beispielsweise Ethylen, Propylen, 2,2-Dimethylpropylen, Tetramethylen oder Hexamethylen dar.

Stellen $G^{21}$ und $G^{22}$ zusammen $C_4$-$C_5$-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

70) 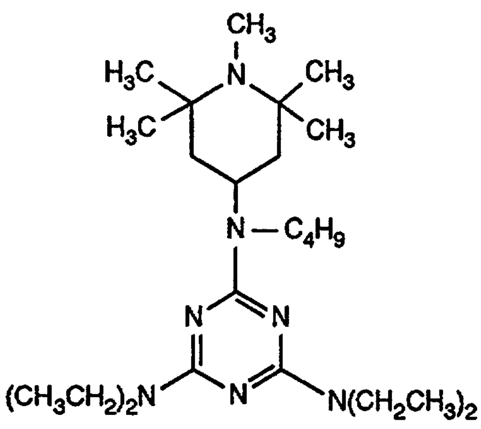

71) 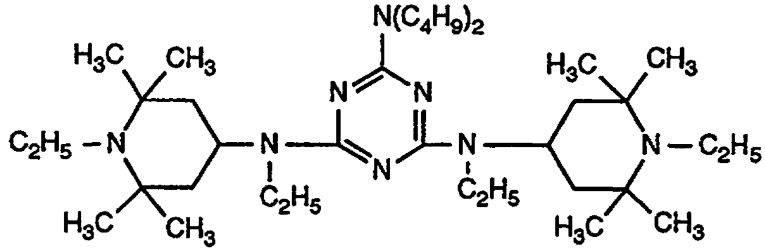

72) 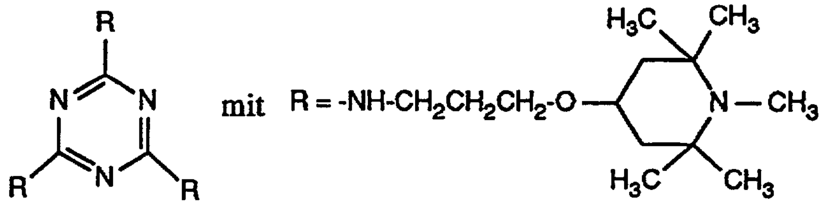

73) 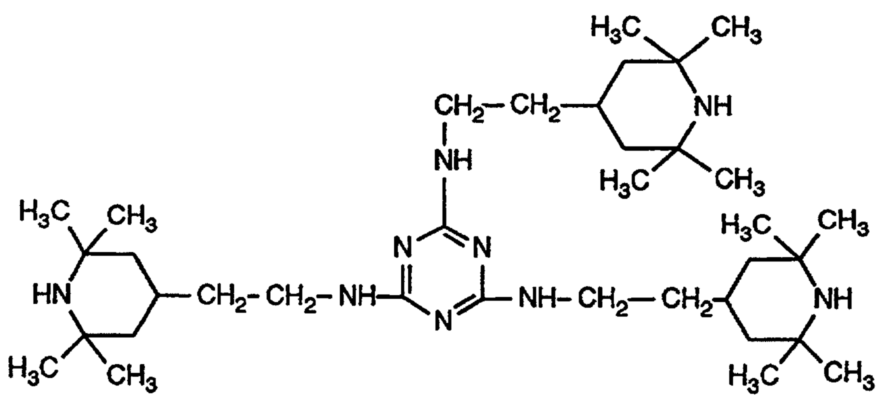

74) 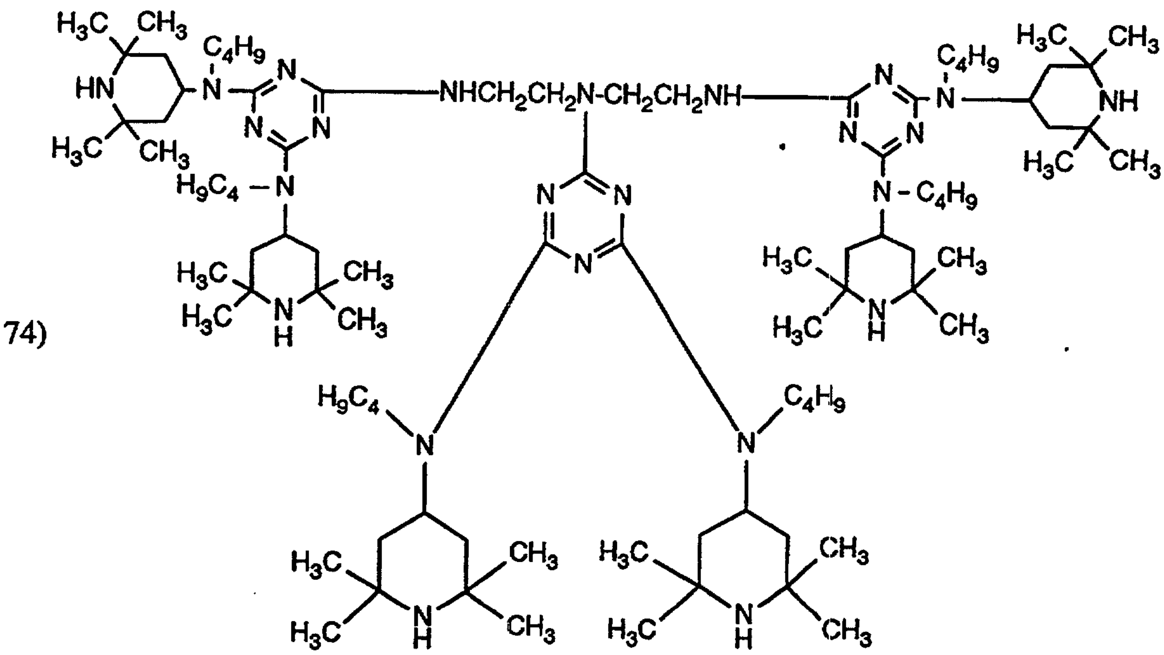

75) 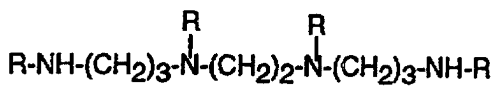

mit R = 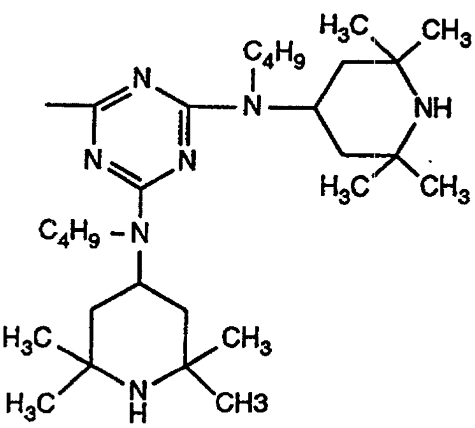

76) 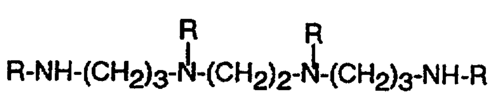 (Amin J)

mit R = 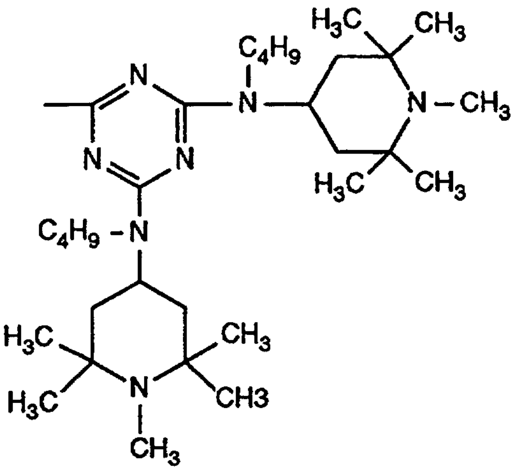

77) 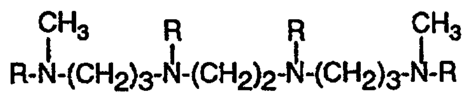

mit R = 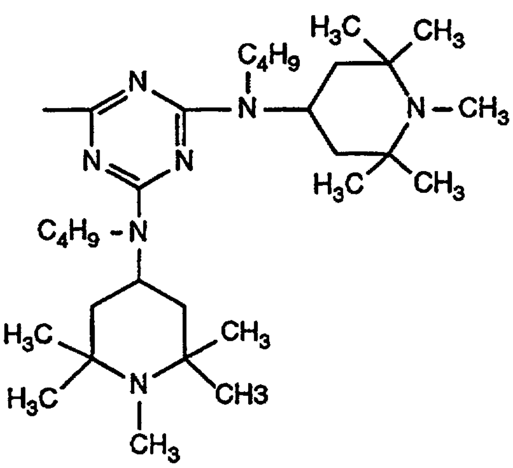

78) 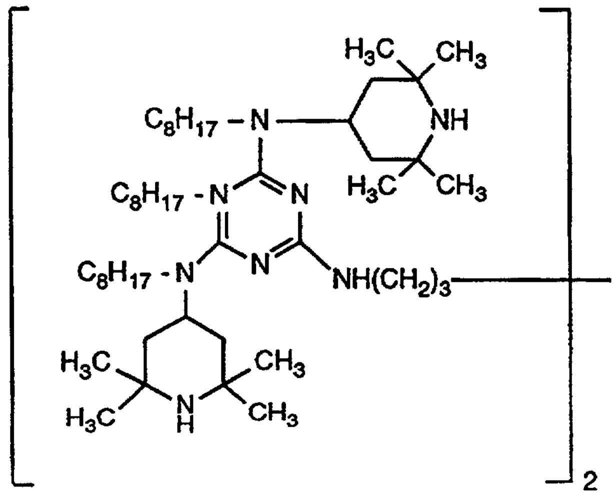

79) 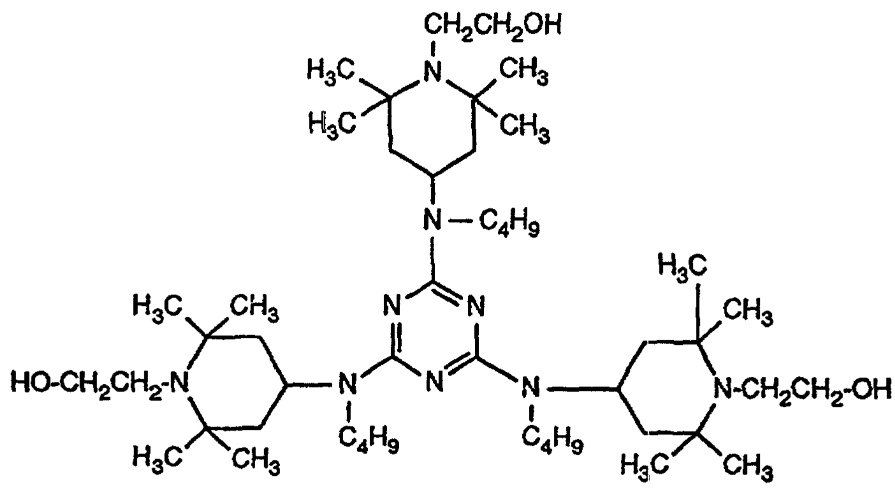

(80) 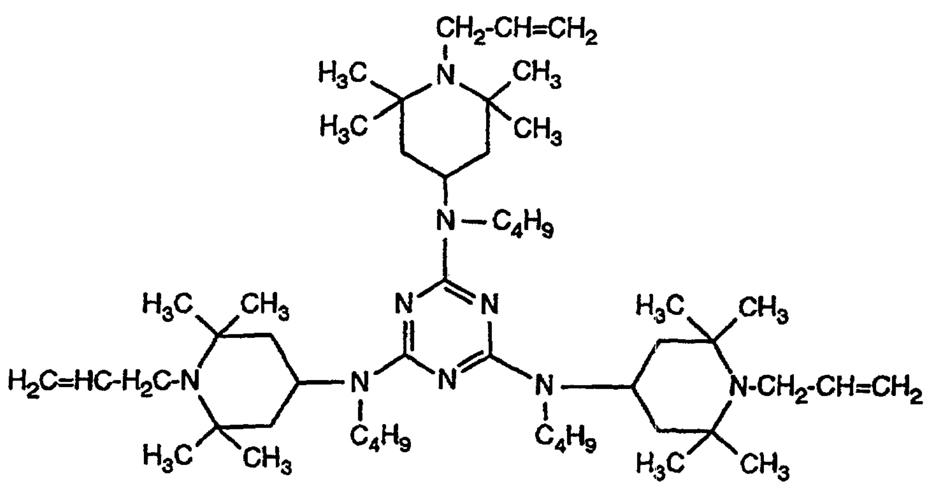

(f) Oligomere oder polymere Verbindungen, deren wiederkehrende Struktureinheit einen 2,2,6,6-Tetraalkylpiperidinrest der Formel III enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

(81)

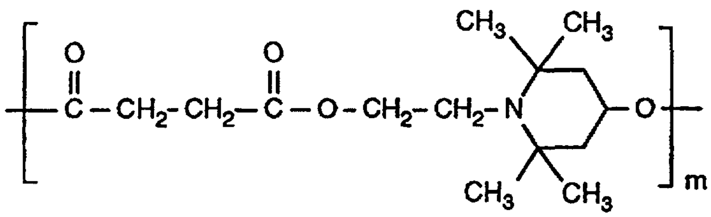

82)

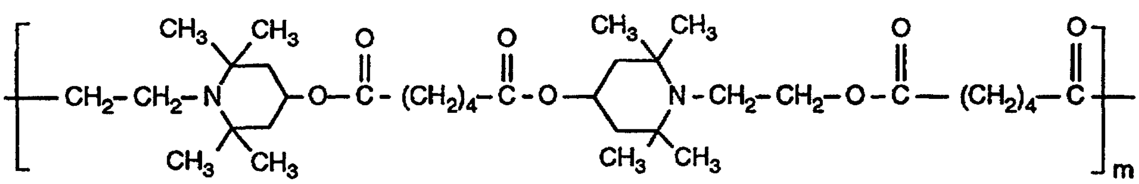

83)

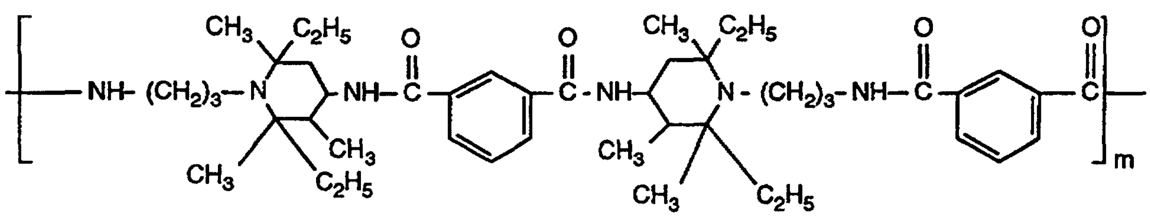

(84)

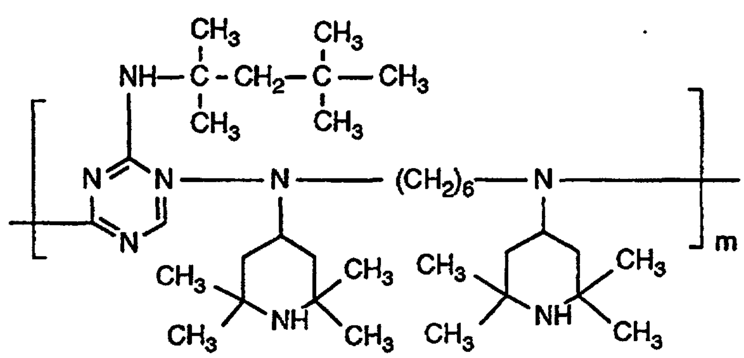

(85) 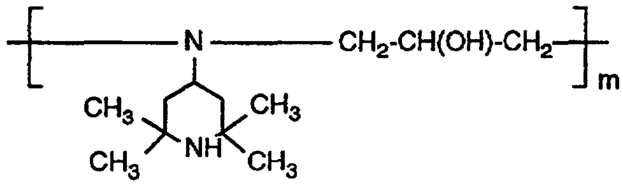

(86) 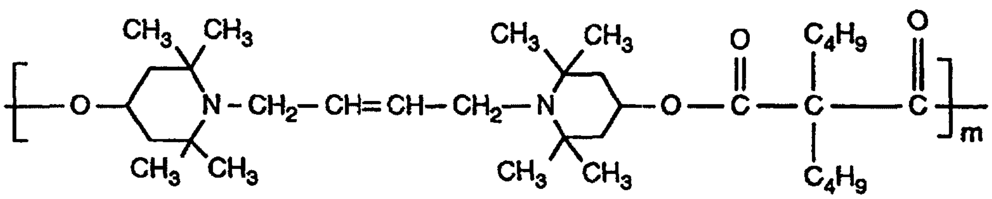

(87) 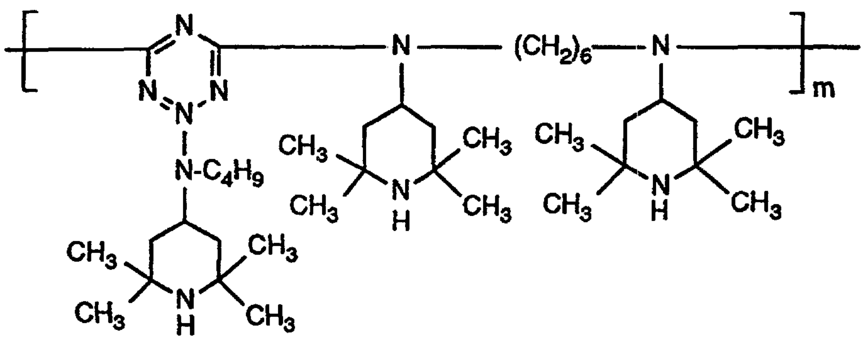

(88) 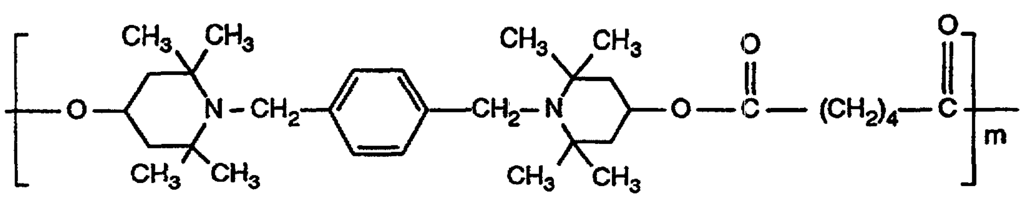

(89) 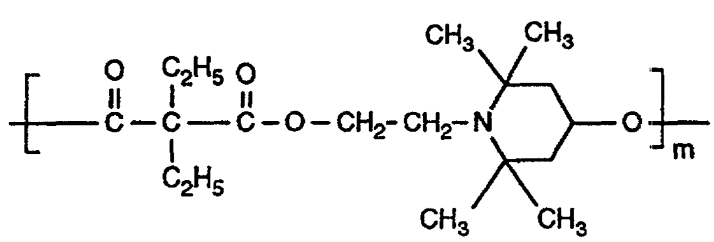

90) 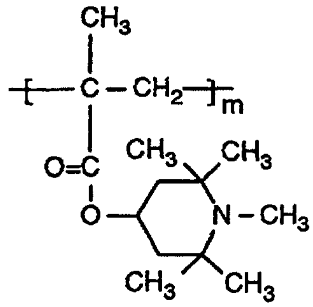

91) 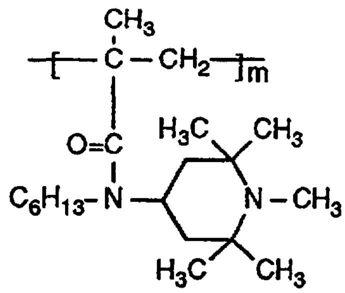

92) 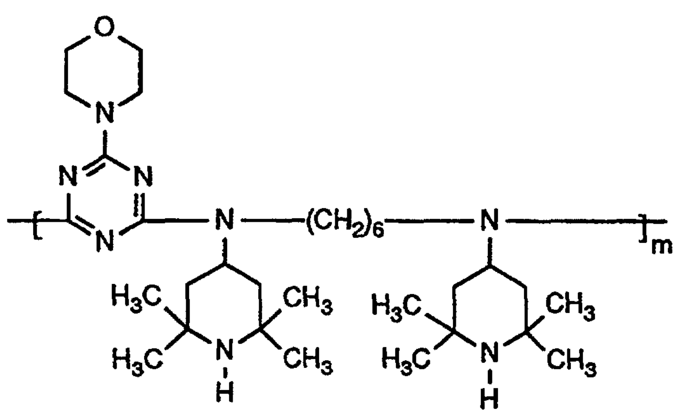

93) 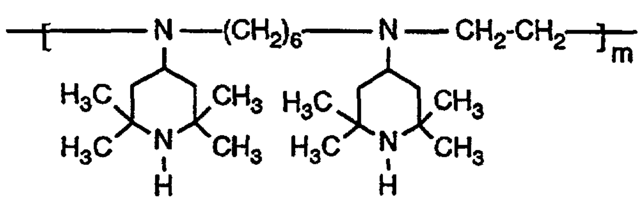

94) 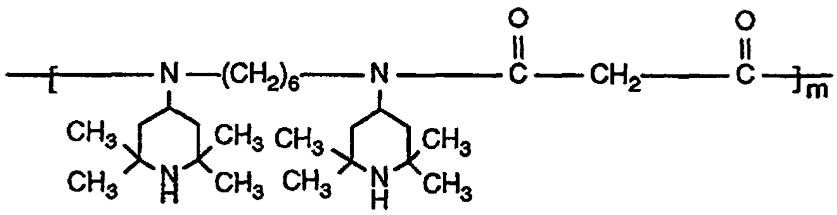

95) 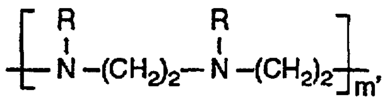

wobei R =

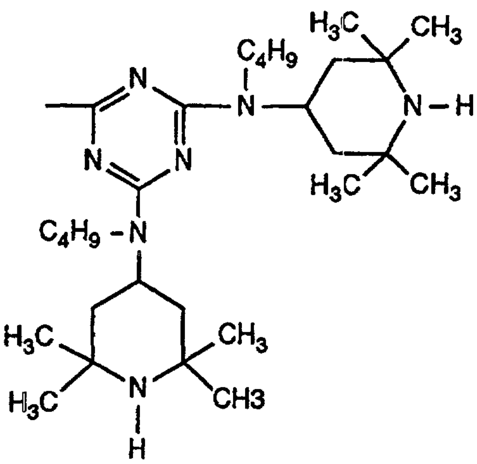

ist oder für eine Verzweigung der Kette

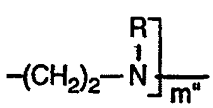

steht, m' und m" jeweils eine ganze Zahl aus dem Bereich 0-200 bedeuten mit der Bedingung m' + m" = m.

Weitere Beispiele für polymere Lichtschutzmittel sind Umsetzungsprodukte von Verbindungen der Formel

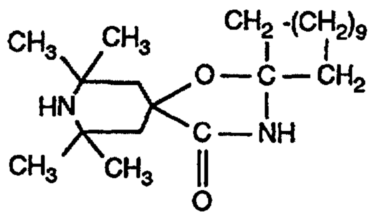

mit Epichlorhydrin;
Polyester aus Butan-1,2,3,4-tetracarbonsäure mit einem bifunktionellen Alkohol der Formel

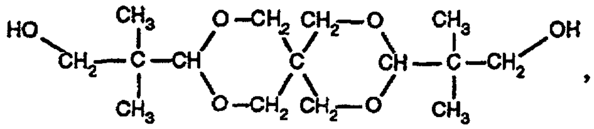

dessen von der Tetracarbonsäure stammenden Carboxyl-Seitenketten mit 2,2,6,6-Tetramethyl-4-hydroxy-piperidin verestert sind;
Verbindungen der Formel

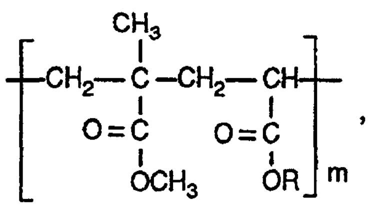

wobei ca. ein Drittel der Reste R die Bedeutung $-C_2H_5$ haben und die anderen

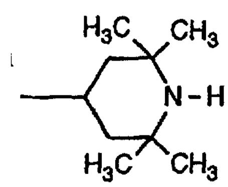

bedeuten und m eine Zahl aus dem Bereich von 2 bis 200 ist; oder
Copolymerisate, deren Wiederkehrende Einheit aus 2 Einheiten

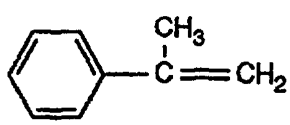

und jeweils 1 Einheit

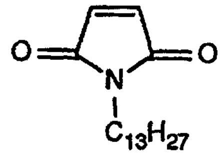 und 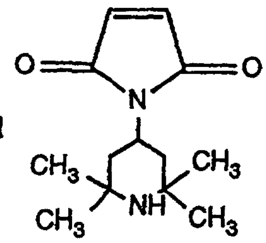

aufgebaut ist.

(g) Verbindungen der Formel IX

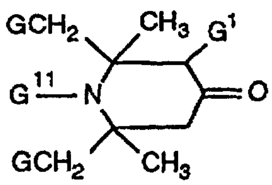

(IX)

worin G, $G^1$ und $G^{11}$ die unter (a) angegebene Bedeutung haben.

Bevorzugt sind Verbindungen der Formel IX, worin G Wasserstoff oder Methyl ist und $G^{11}$ Wasserstoff oder Methyl ist.

Beispiele für solche Verbindungen sind:

96) 2,2,6,6-Tetramethyl-4-piperidon (Triacetonamin)
97) 1,2,2,6,6-Pentamethyl-4-piperidon
98) 2,2,6,6-Tetramethyl-4-piperidon-1-oxyl
99) 2,3,6-Trimethyl-2,6-diethyl-4-piperidon

(h) Verbindungen der Formel X

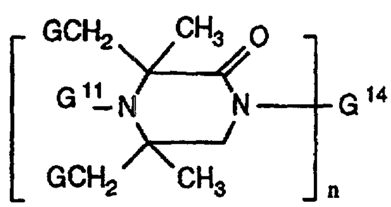

(X)

worin n die Zahl 1 oder 2 bedeutet und worin G und $G^{11}$ die unter (a), und $G^{14}$ die unter (b) angegebene Bedeutung haben, wobei für $G^{14}$ die Bedeutungen -CONH-Z und $-CH_2-CH(OH)-CH_2-O-D-O-$ ausgeschlossen sind.

Beispiele für solche Verbindungen sind:

100) 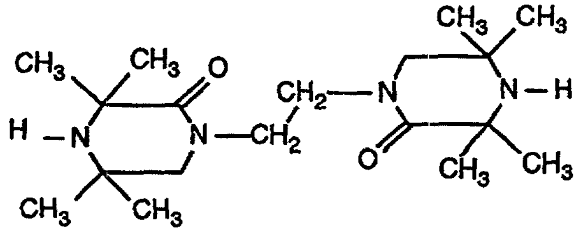 (Amin M)

101) 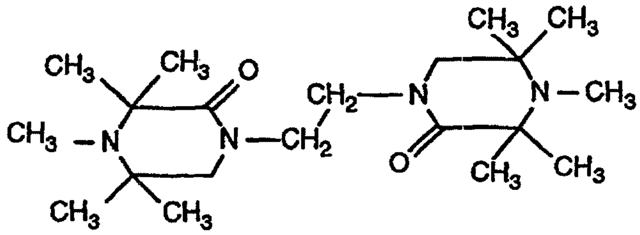

102) 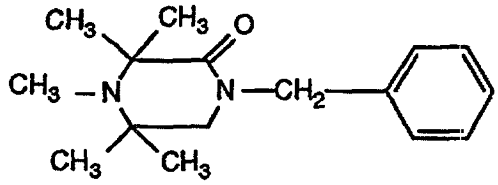

Besonders bevorzugt zur Verwendung im erfindungsgemäßen Verfahren sind die folgenden Amine:

Verbindungen der Formel IV, worin n eine ganze Zahl aus dem Bereich von 1 bis 4 bedeutet, G und $G^1$ Wasserstoff sind und

$G^{11}$ Wasserstoff oder $C_1$-$C_{18}$-Alkyl und

$G^{12}$, wenn n = ist, einen Rest der Formel -$(C_jH_{2j})$-$Si(Z')_2Z''$, worin j eine ganze Zahl aus dem Bereich von 2 bis 5, und Z' und Z'' unabhängig voneinander $C_1$-$C_4$-Alkyl oder $C_1$-$C_4$-Alkoxy bedeuten, darstellt und

$G^{12}$, wenn n = 2 ist, einen Rest einer aliphatischen Dicarbonsäure mit 2 bis 12 C-Atomen, der durch -$COOZ^{12}$ substituiert sein kann, wobei $Z^{12}$ $C_1$-$C_{20}$-Alkyl ist,

$G^{12}$, wenn n = 3 ist, einen Rest einer aromatischen Tricarbonsäure mit 9 bis 15 C-Atomen, $G^{12}$, wenn n = 4 ist, einen Rest einer aliphatischen Tetracarbonsäure mit 8 bis 12 C-Atomen darstellt; Amine von besonderem technischem Interesse aus dieser Klasse sind solche der Formeln

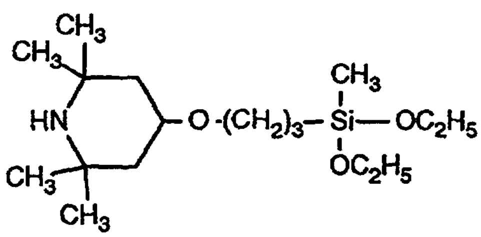 (Amin B),

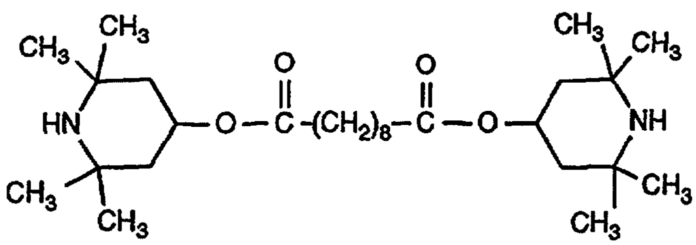 (Amin C),

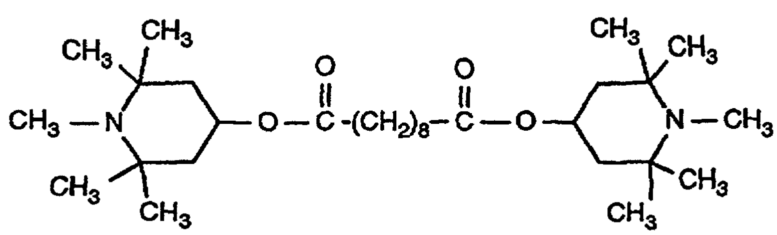 (Amin D),

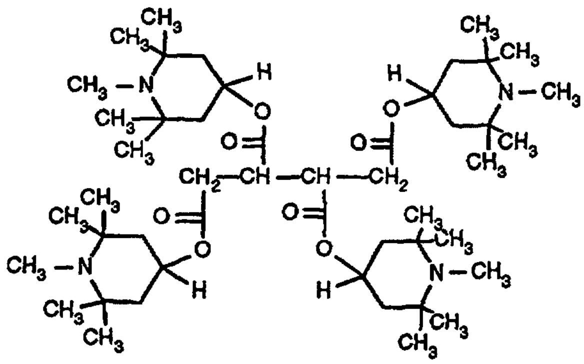

(Amin E),

sowie Ester der Butan-1,2,3,4-tetracarbonsäure mit je 2 Einheiten 1,2,2,6,6-Pentamethyl-4-hydroxy-piperidin und $C_{13}H_{27}$-OH (Amin F);

Verbindungen der Formel V, worin n 2 ist, G und $G^1$ Wasserstoff sind,
$G^{11}$ Wasserstoff oder Methyl und
$G^{13}$ Wasserstoff oder $C_1$-$C_8$-Alkyl bedeuten, und
$G^{14}$ $C_2$-$C_8$-Alkylen oder 1-Oxo-$C_2$-$C_8$-alkylen ist; ein Amin von besonderem technischem Interesse aus dieser Klasse ist die Verbindung der Formel

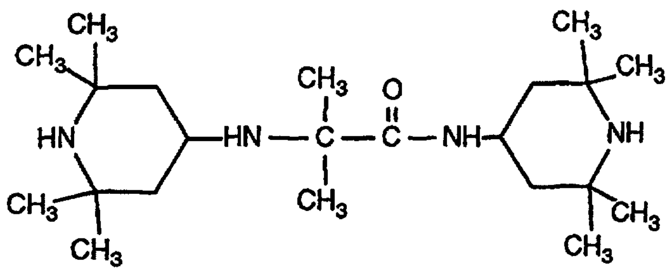

(Amin G);

Verbindungen der Formel VIIC, worin n 1 ist, G,$G^1$ und $G^{17}$ Wasserstoff sind,
$G^{11}$ Wasserstoff oder Methyl bedeutet, und
$T_1$ und $T_2$ zusammen mit dem sie bindenden C-Atom einen $C_5$-$C_{14}$-Cycloalkanring bilden;
ein Amin von besonderem technischem Interesse aus dieser Klasse ist die Verbindung der Formel

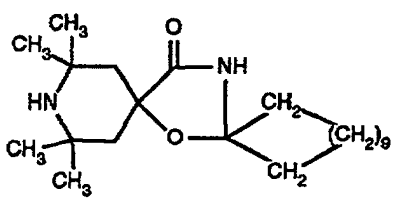

(Amin H);

Verbindungen der Formel VIII, worin n 1 oder 2 ist,
$G^{18}$ und $G^{19}$ eine Gruppe einer der Formeln

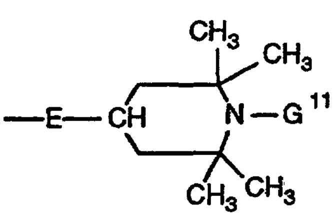

oder

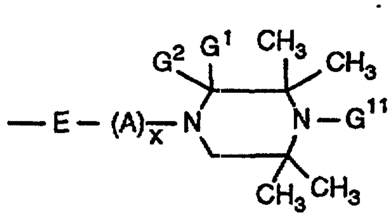

bedeuten,
$G^{11}$ Wasserstoff oder Methyl ist,
$G^1$ und $G^2$ Wasserstoff oder gemeinsam einen Substituenten =O bedeuten,
E -O- oder -$NG^{13}$- ist, A $C_2$-$C_6$-Alkylen und x eine der Zahlen O oder 1 bedeuten,
$G^{13}$ Wasserstoff, $C_1$-$C_{12}$-Alkyl oder Cyclohexyl darstellt,
$G^{20}$, wenn n = 1 ist, gleich $G^{18}$, und wenn n = 2 ist, eine Gruppe -E-B-E- ist, worin B $C_2$-$C_8$-Alkylen oder durch 1 oder 2 Gruppen -N($G^{21}$)- unterbrochenes $C_2$-$C_8$-Alkylen bedeutet,
$G^{21}$ $C_1$-$C_{12}$-Alkyl, Cyclohexyl, Benzyl oder $C_1$-$C_4$-Hydroxyalkyl oder eine Gruppe der Formel

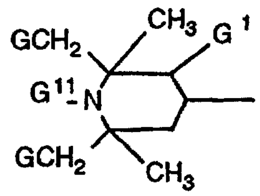

ist, oder $G^{21}$ eine Gruppe der Formel

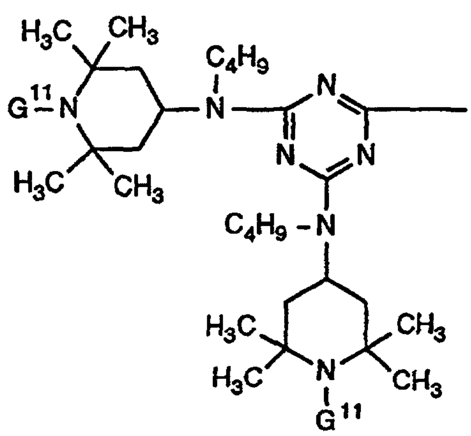

bedeutet;

Amine von besonderem technischem Interesse aus dieser Klasse sind die oben beschriebene Verbindung (76)[= Amin J] sowie die Verbindungen der Formeln

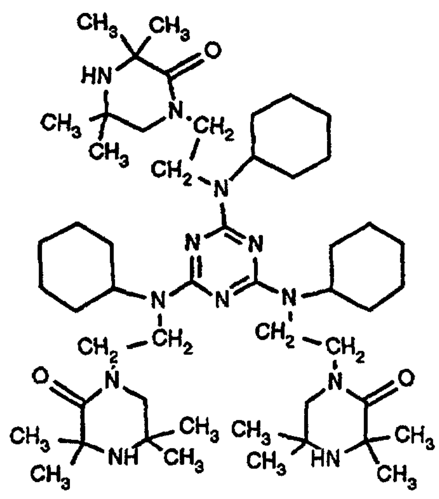

und

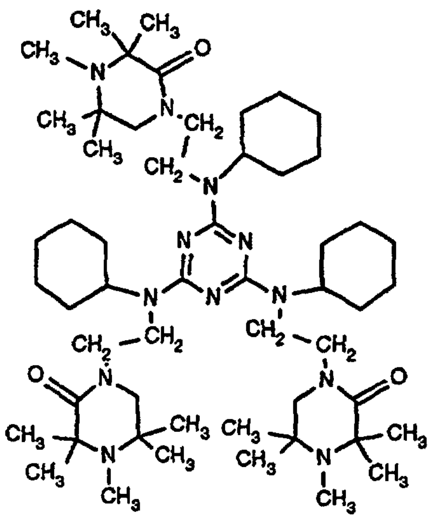

(Amine K und L);

Verbindungen der Formel X, worin n 2 ist, $G^{11}$ Wasserstoff oder Methyl und $G^{14}$ $C_2$-$C_{12}$-Alkylen bedeutet; ein Amin von besonderem technischem Interesse aus dieser Klasse ist die oben beschriebene Verbindung (100) [= Amin M]; sowie oligomere Verbindungen mit 2 bis 10 wiederkehrenden Einheiten, wie sie durch Reaktion

(i) von

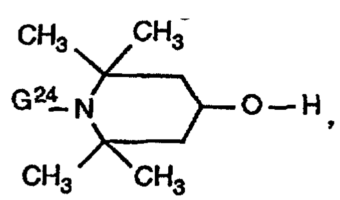

worin $G^{24}$ $C_2$-$C_5$-Hydroxyalkyl bedeutet, mit einer aliphatischen $C_2$-$C_{12}$-Dicarbonsäure oder einem geeigneten reaktiven Derivat wie dem Diester, dem Dichlorid oder dem Anhydrid;

(j) von einem linearen oligomeren Polyester aus einem Dialkohol und Butan-1,2,3,4-tetracarbonsäure mit 2,2,6,6-Tetramethyl-4-hydroxy-piperidin;

(k) von

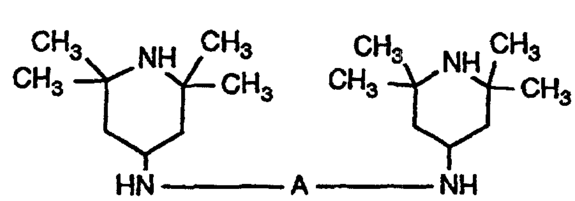

mit

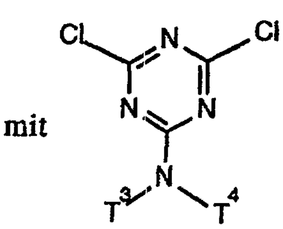

,

worin A $C_2$-$C_6$-Alkylen, $T^3$ $C_1$-$C_{18}$-Alkyl oder Cyclohexyl, $T^4$ Wasserstoff oder $C_1$-$C_{18}$-Alkyl, oder $T^3$ und $T^4$ zusammen $C_4$-$C_6$-Alkylen oder $C_3$-$C_5$-Oxaalkylen bedeuten;

(1) von $H_2N$-A-NH-A-$NH_2$ mit

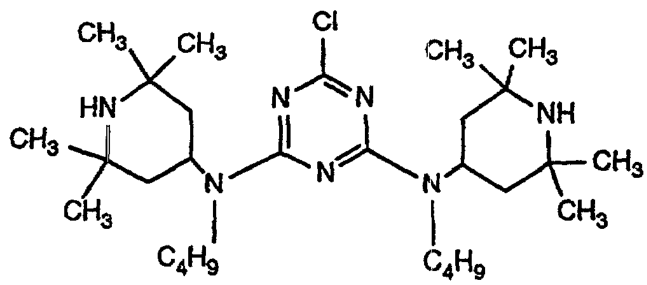

und Br-A-Br, worin A $C_2$-$C_6$-Alkylen bedeutet;

(m) von Verbindungen der Formel

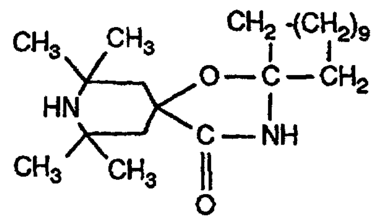

mit Epichlorhydrin;

(n) von

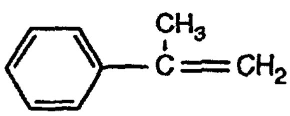 mit 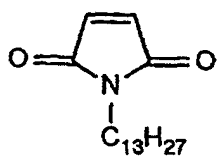 und 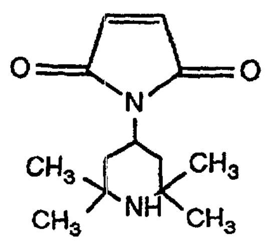

erhältlich sind, sowie solche der Formel

(o)

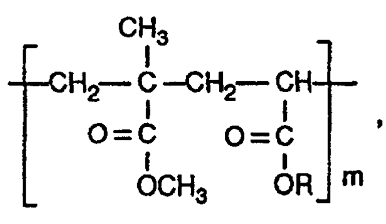

worin ca. ein Drittel der Reste R die Bedeutung $-C_2H_5$ haben und die anderen

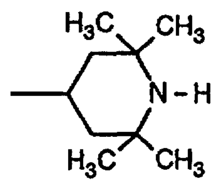

bedeuten und m eine Zahl aus dem Bereich von 2 bis 10 ist;

oligomere Amine von besonderem technischem Interesse sind darunter solche der Formeln (m bezeichnet wiederum eine Zahl aus dem Bereich von 2 bis 10)

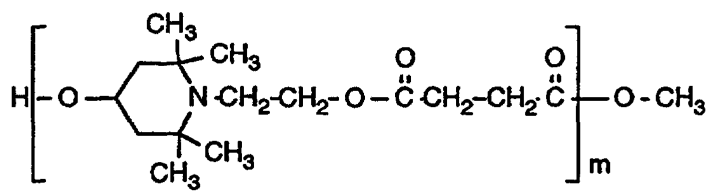 (CAS-No. 65447-77-0; Amin N);

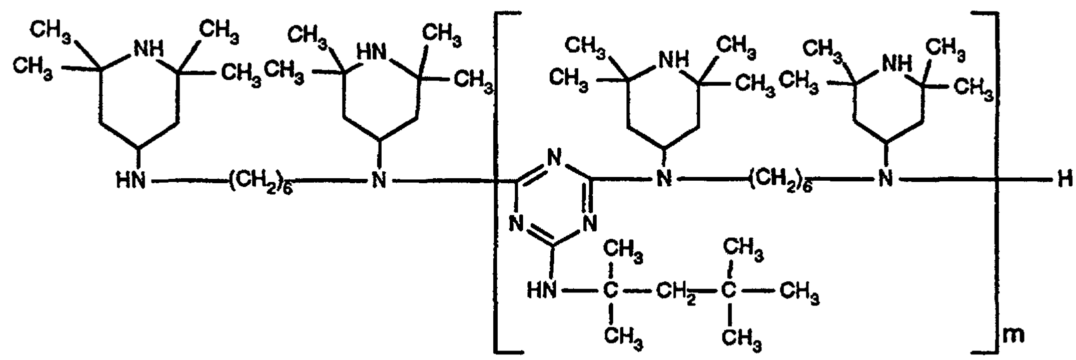

(CAS-No. 70624-18-9; Amin P);

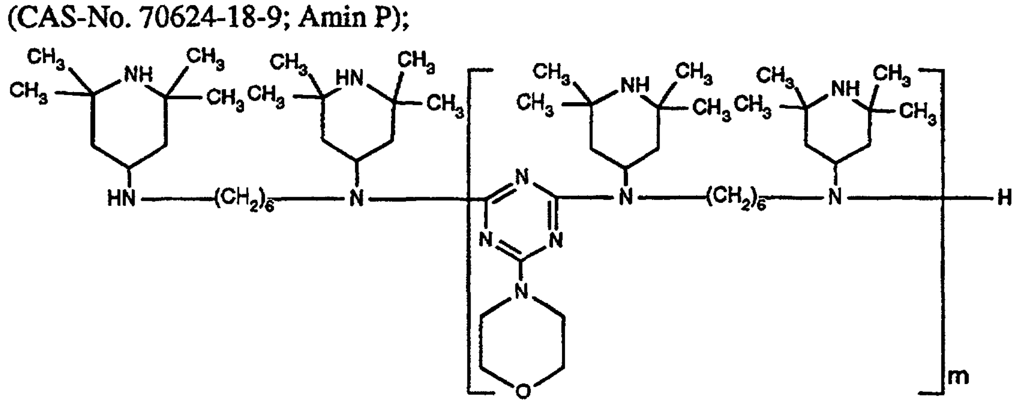

(Amin Q);

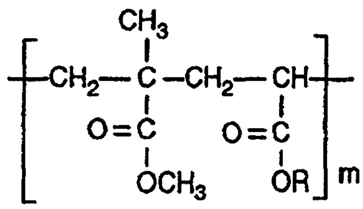 (Amin R),

worin ca. ein Drittel der Reste R die Bedeutung $-C_2H_5$ haben und die anderen

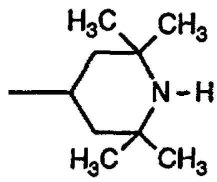

bedeuten; ein linearer Polyester mit 2 bis 10 wiederkehrenden Einheiten aus Butan-1,2,3,4-tetracarbonsäure und einem Dialkohol der Formel

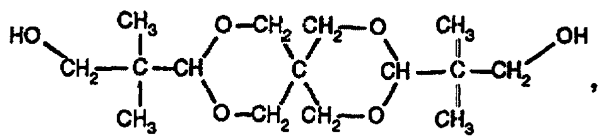 ,

worin die Endgruppen und Seitenketten durch Veresterung der freien Carboxylgruppen mit 2,2,6,6-Tetramethyl-4-hydroxy-piperidin gebildet werden (Amin S); ein Copolymerisat, dessen wiederkehrende Einheit aus 2 Einheiten

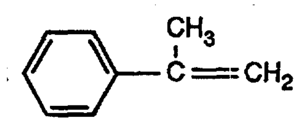

und jeweils 1 Einheit

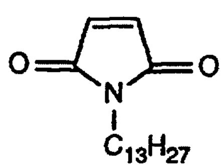 und 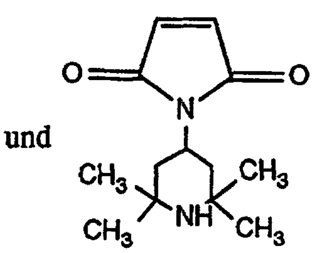

aufgebaut ist (Amin T); das Umsetzungsprodukt von $H_2N-(CH_2)_2-NH-(CH_2)_2-HN_2$ mit

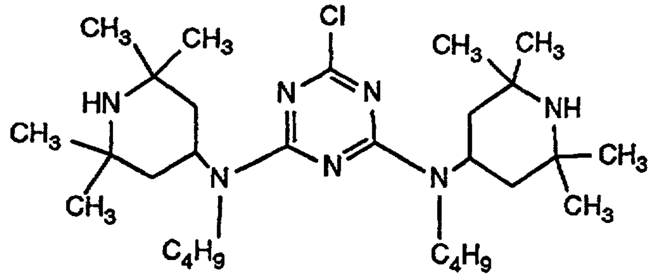

und Br-$(CH_2)_2$-Br (Amin U); sowie das Umsetzungsprodukt der Verbindung der Formel

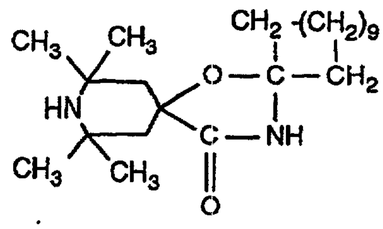

mit Epichlorhydrin (Amin W).

Bei den oligomeren Aminen handelt es sich häufig um Gemische von Verbindungen, die sich bezüglich ihrer Kettenlänge voneinander unterscheiden.

Von hervorgehobener Bedeutung ist die Verwendung der oben spezifizierten Amine A, B, C, D, E, F, G, H, J, K, L, M, N, O, P, Q, R, S, T, U, V und W.

Für die erfindungsgemäßen Zusammensetzungen ist insbesondere der Zusatz solcher Amine bevorzugt, deren Molekulargewicht bzw. mittleres Molekulargewicht $\overline{M}_n$ im Bereich von 300 bis 10000, vor allem im Bereich von 1000 bis 10000 liegt. Darunter besonders hervorzuheben sind nochmals diejenigen Amine, deren Molekulargewicht bzw. mittleres Molekulargewicht $\overline{M}_n$ im Bereich von 1500 bis 10000, beispielsweise im Bereich von 2000 bis 7500 liegt. Bei den Aminen höheren Molekulargewichtes handelt es sich vor allem um sterisch gehinderte Amine.

Hervorzuheben sind insbesondere diejenigen erfindungsgemäßen Zusammensetzungen, die als Komponente (b) 2 oder mehr Verbindungen vom Typ der sterisch gehinderten Amine enthalten.

Die genannten Amine sind bekannte Verbindungen; viele davon sind kommerziell erhältlich.

Die erfindungsgemäßen Zusammensetzungen enthalten vorzugsweise Phosphite oder Phosphonite, welche einer der Formeln (1) bis (7) entsprechen,

(1) 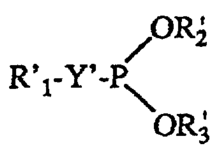 ,

(2) 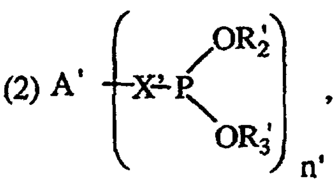 ,

(3) 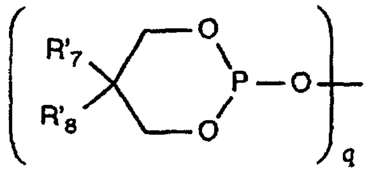 (4) 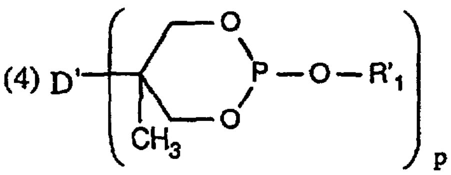,

(5) 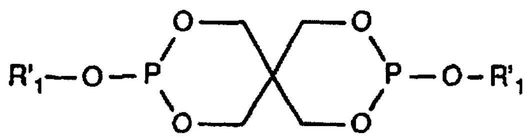

(6) 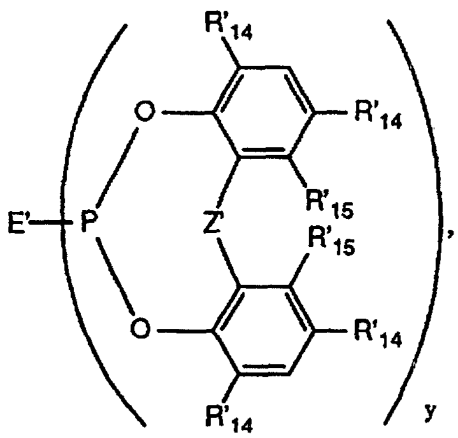, (7) 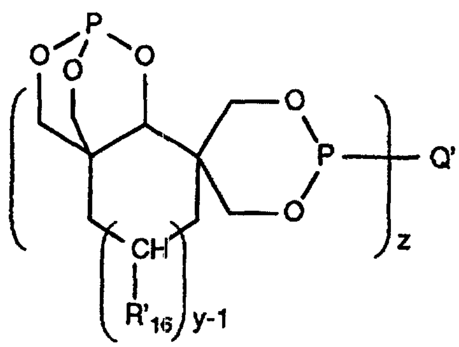

worin die Indices ganzzahlig sind und
n' für 2, 3 oder 4; p für 1 oder 2; q für 2 oder 3; r für 4 bis 12; y für 1, 2 oder 3; und z für 1 bis 6 steht;
A', wenn n' 2 ist, Alkylen mit 2 bis 18 Kohlenstoffatomen; durch -S-, -O- oder -NR'$_4$-unterbrochenes Alkylen mit 2 bis 12 Kohlenstoffatomen; ein Rest einer der Formeln

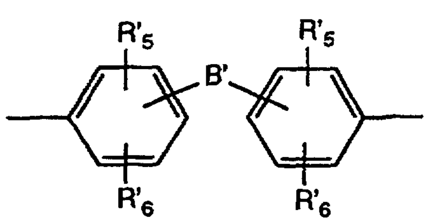 oder 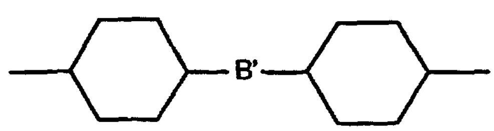

oder Phenylen ist;
A', wenn n' 3 ist, ein Rest der Formel $-C_rH_{2r-1}-$ist;
A', wenn n' 4 ist, den Rest der Formel

$$C(CH_2)_4$$

bedeutet;
A" die Bedeutung von A', wenn n' 2 ist, hat;
B' einen Rest der Formel $-CH_2-$; $-CHR'_4-$; $-CR'_1R'_4-$; -S- oder eine direkte Bindung darstellt; oder $C_5$-$C_7$-Cycloalkyliden; oder mit 1 bis 4 $C_1$-$C_4$-Alkylresten in Position 3, 4 und/oder 5 substituiertes Cyclohexyliden bedeutet;
D', wenn p 1 ist, Methyl und, wenn p 2 ist, $-CH_2OCH_2-$ bedeutet;
E', wenn y 1 ist, Alkyl mit 1 bis 18 Kohlenstoffatomen, ein Rest der Formel $-OR'_1$ oder Halogen ist;
E', wenn y 2 ist, ein Rest der Formel -O-A"-O- ist;
E', wenn y 3 ist, ein Rest der Formel

$$R'_4C(CH_2O\!-\!)_3\!-$$

ist;
Q' für den Rest eines mindestens z-wertigen Alkohols oder Phenols steht, wobei dieser über das (die) alkoholische(n) bzw. phenolische(n) O-Atom(e) an das (die) P-Atom(e) gebunden ist;
$R'_1$, $R'_2$ und $R'_3$ unabhängig voneinander Alkyl mit 1 bis 30 Kohlenstoffatomen; mit Halogen, $-COOR_4'$, -CN oder $-CONR_4'R_4'$ substituiertes Alkyl mit 1 bis 18 Kohlenstoffatomen; durch -S-, -O- oder $-NR'_4-$ unterbrochenes Alkyl mit 2 bis 18 Kohlenstoffatomen;
Phenyl-$C_1$-$C_4$-alkyl; Cycloalkyl mit 5 bis 12 Kohlenstoffatomen; Phenyl oder Naphthyl;
mit Halogen, 1 bis 3 Alkylresten oder Alkoxyresten mit insgesamt 1 bis 18 Kohlenstoffatomen oder mit Phenyl-$C_1$-$C_4$-alkyl substituiertes Phenyl oder Naphthyl; oder ein Rest der Formel

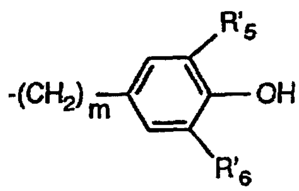

sind, worin m eine ganze Zahl aus dem Bereich 3 bis 6 bedeutet;
$R'_4$ beziehungsweise die Reste $R_4'$ unabhängig voneinander Wasserstoff; Alkyl mit 1 bis 18 Kohlenstoffatomen; Cycloalkyl mit 5 bis 12 Kohlenstoffatomen; oder Phenylalkyl mit 1 bis 4 Kohlenstoffatomen im Alkylteil;
$R'_5$ und $R'_6$ unabhängig voneinander Wasserstoff; Alkyl mit 1 bis 8 Kohlenstoffatomen oder Cycloalkyl mit 5 oder 6 Kohlenstoffatomen sind;
$R'_7$ und $R'_8$, im Fall q = 2, unabhängig voneinander $C_1$-$C_4$-Alkyl oder zusammen einen 2,3-Dehydro-pentamethylenrest darstellen; und
$R'_7$ und $R'_8$, im Fall q = 3, Methyl bedeuten;
die Substituenten $R'_{14}$ unabhängig voneinander Wasserstoff; Alkyl mit 1 bis 9 Kohlenstoffatomen oder Cyclohexyl sind;
die Substituenten $R'_{15}$ unabhängig voneinander Wasserstoff oder Methyl; und
$R'_{16}$ Wasserstoff oder $C_1$-$C_4$-Alkyl darstellt und im Fall, daß mehrere Reste $R'_{16}$ vorhanden sind, die Reste $R'_{16}$ gleich oder verschieden sind;
X' und Y' jeweils eine direkte Bindung oder -O- darstellen; und
Z' eine direkte Bindung; $-CH_2-$; $-C(R'_{16})_2-$ oder -S- ist.

Besonders bevorzugt ist ein Verfahren, worin das Phosphit oder Phosphonit eines der Formeln (1), (2), (5) oder (6) ist, worin
n' für die Zahl 2 und y für die Zahl 1 oder 2 steht;
A' Alkylen mit 2 bis 18 Kohlenstoffatomen; p-Phenylen oder p-Biphenylen ist;
E' im Fall y = 1 $C_1$-$C_{18}$-Alkyl, $-OR_1$ oder Fluor; und im Fall y = 2 p-Biphenylen ist;
$R'_1$, $R'_2$ und $R'_3$ unabhängig voneinander Alkyl mit 1 bis 18 Kohlenstoffatomen;
Phenyl-$C_1$-$C_4$-alkyl; Cyclohexyl; Phenyl; mit 1 bis 3 Alkylresten mit insgesamt 1 bis 18 Kohlenstoffatomen substituiertes Phenyl bedeutet;
die Substituenten $R'_{14}$ unabhängig voneinander Wasserstoff oder Alkyl mit 1 bis 9 Kohlenstoffatomen sind;
$R'_{15}$ Wasserstoff oder Methyl ist;
X' eine direkte Bindung;
Y' -O-; und
Z' eine direkte Bindung oder $-CH(R'_{16})-$ ist.

Ein Verfahren zum Stabilisieren eines Phosphits oder Phosphonits einer der Formeln (1), (2), (5) oder (6),

worin
n' für die Zahl 2 und y für die Zahl 1 steht;
A' p-Biphenylen ist;
E' $C_1$-$C_{18}$-Alkoxy oder Fluor ist;
$R'_1$, $R'_2$ und $R'_3$ unabhängig voneinander Alkyl mit 1 bis 18 Kohlenstoffatomen; mit 2 oder 3 Alkylresten mit insgesamt 2 bis 12 Kohlenstoffatomen substituiertes Phenyl bedeutet;
die Substituenten $R'_{14}$ unabhängig voneinander Methyl oder tert.-Butyl sind;
$R'_{15}$ Wasserstoff ist;
X' eine direkte Bindung;
Y' -O-; und
Z' eine direkte Bindung, $-CH_2-$ oder $-CH(CH_3)-$ ist,
ist von besonderem technischem Interesse.

Besonders bevorzugt sind Phosphite, insbesondere solche der Formeln (1) und (5).

Die folgenden Verbindungen sind Beispiele für Phosphite und Phosphonite, deren Stabilität gegenüber Hydrolyse sich durch das erfindungsgemäße Verfahren besonders vorteilhaft verbessern läßt:

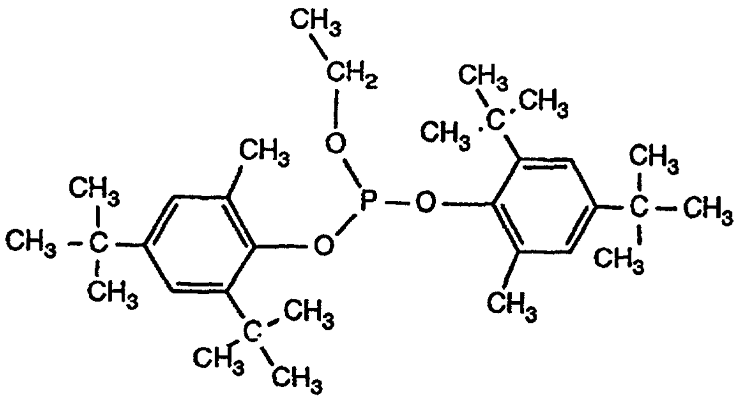

(Ph-1);

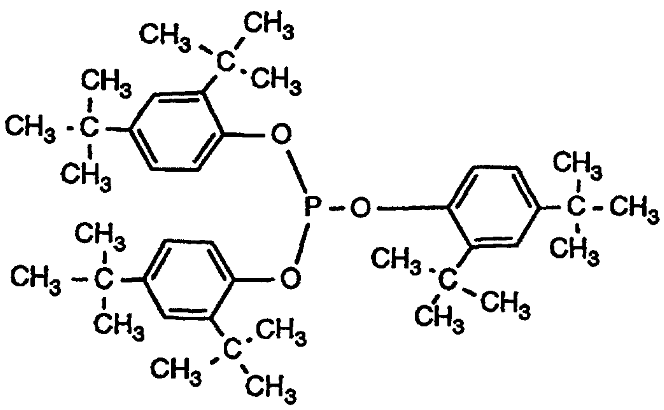

(Ph-2);

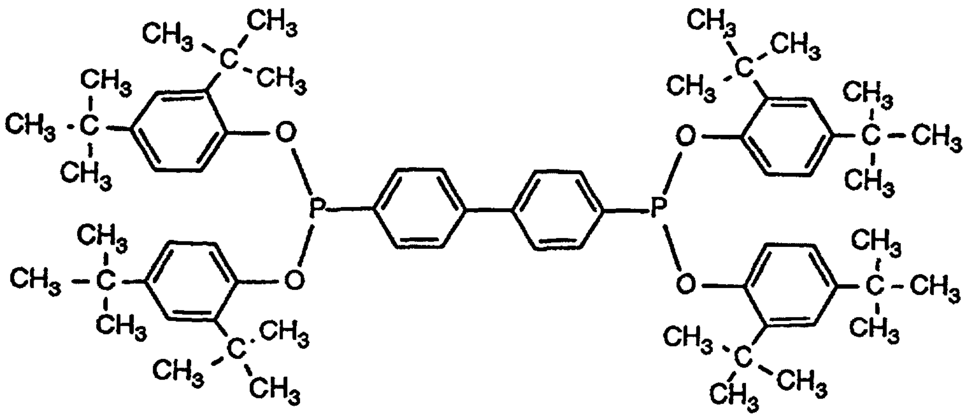

(Ph-3);

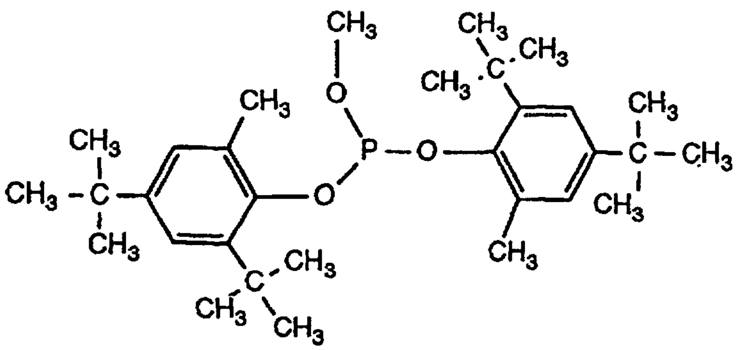

(Ph-4);

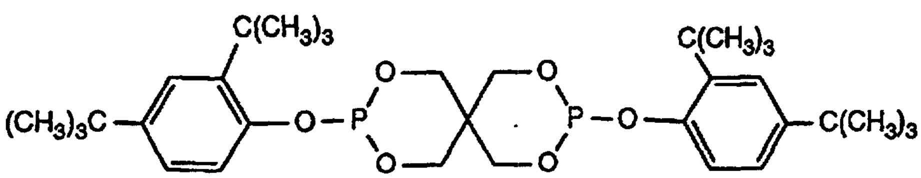

(Ph-5);

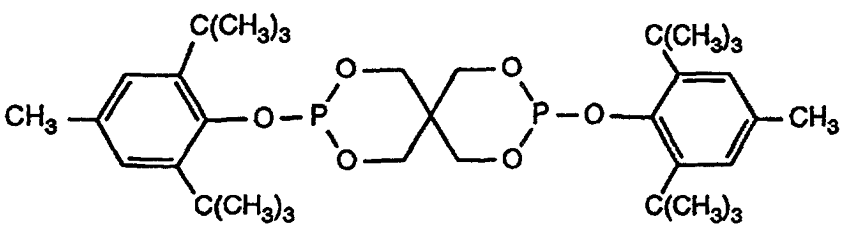

(Ph-6);

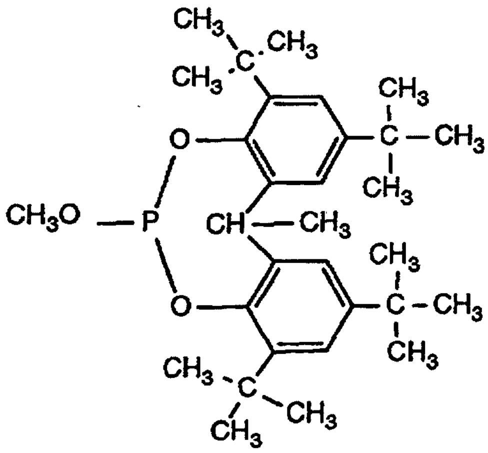

(Ph-7);

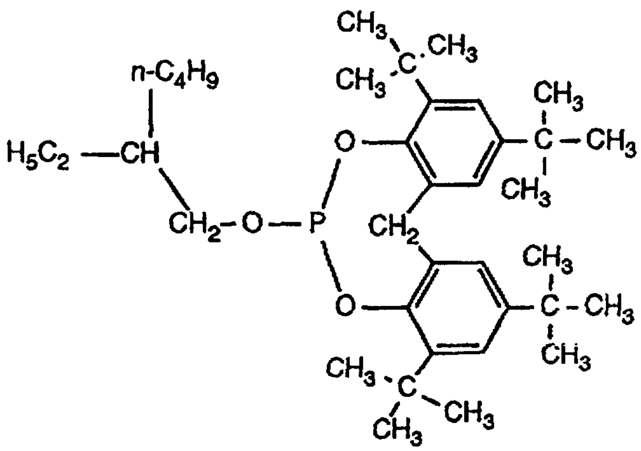

(Ph-8);

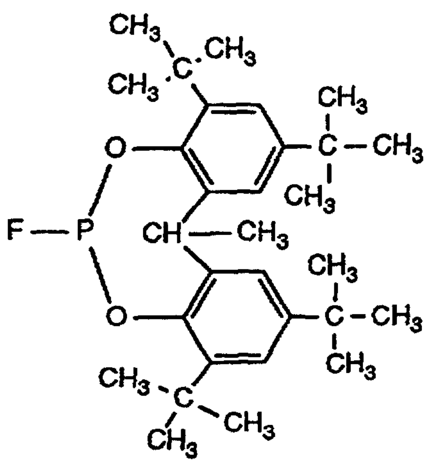

(Ph-9);

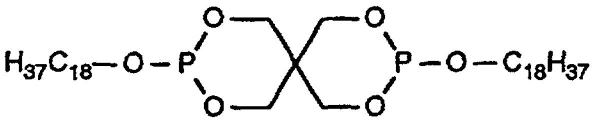

(Ph-10).

Die genannten Phosphite und Phosphonite sind bekannte Verbindungen; sie sind zum Teil kommerziell erhältlich.

Gegenstand der Erfindung ist auch ein Verfahren zur Stabilisierung eines organischen Phosphits oder Phosphonits oder eines Gemisches organischer Phosphite oder Phosphonite gegen Hydrolyse, dadurch gekennzeichnet, daß man als Stabilisator (b) ein organisches Amin und (c) ein säurebindendes Metallsalz zusetzt, so daß das stabilisierte Phosphit oder Phosphonit 0,01 bis 50 Gew.-% der aminischen Komponente (b) und 0,01 bis 25 Gew.-% säurebindendes Metallsalz (c) (jeweils bezogen auf das Gesamtgewicht) enthält, sowie die Verwendung eines organischen Amins in Kombination mit einem säurebindenden Metallsalz als Hydrolysestabilisator für organische Phosphite oder Phosphonite. Bevorzugte Mengenbereiche und Einzelkomponenten zur Verwendung im erfindungsgemäßen Verfahren sind wie oben aufgeführt.

Ein gegen Hydrolyse stabilisiertes organisches Phosphit oder Phosphonit, wie es durch das oben beschriebene Verfahren erhältlich ist, bildet ebenfalls einen Gegenstand dieser Erfindung.

Bevorzugt ist die Verwendung von sterisch gehinderten Aminen in Kombination mit säurebindenden Metallsalzen, insbesondere von sterisch gehinderten Aminen mit einem Molekulargewicht oder mittleren Molekulargewicht im Bereich von 1500 bis 10000 und vor allem in Kombination mit Hydrotalciten und/oder Zeolithen, als Stabilisator für organische Phosphite und/oder Phosphonite gegen Hydrolyse, insbesondere gegen Hydrolyse bei Lagerung im Kontakt mit feuchter Luft. Besonders bevorzugt ist die Verwendung als Hydrolysestabilisator für organische Phosphite. Zur Erzielung der gewünschten verbesserten Hydrolysestabilität können beliebige Mengen an sterisch gehindertem Amin und säurebindendem Metallsalz verwendet werden, beispielsweise jeweils 0,01 bis 200 Gew-%, besonders 0,01 bis 100 Gew-%, vorzugsweise 0,01 bis 50 Gew.-%, vor allem 0,1 bis 25 Gew-%, bezogen auf die Menge an Phosphit oder Phosphonit. Die Menge an säurebindendem Metallsalz beträgt dabei zweckmäßig mindestens 0,01 Gew.-%, bezogen auf die stabilisierte Zusammensetzung.

Die Erfindung beinhaltet gleichzeitig eine Methode zur Lagerung von festen organischen Phosphiten oder Phosphoniten, dadurch gekennzeichnet, daß man den Phosphiten oder Phosphoniten 0,01 bis 200; im Allgemeinen 0,01 bis 100; vorzugsweise 0,01 bis 50; insbesondere 0,1 bis 25 Gew.-% (bezogen auf Phosphit bzw. Phosphonit) jeweils eines sterisch gehinderten Amins und eines säurebindenden Metallsalzes beimischt.

Einige kommerzielle organische Phosphiten oder Phosphonite liegen als Verbindungsgemische oder in vorstabilisierter Form vor; als Vorstabilisierung wird häufig ein organisches Amin in einer Konzentration von ca. 1 % eingesetzt. Auch die Hydrolysestabilität derartiger Produkte läßt sich mit Hilfe des erfindungsgemäßen Verfahrens deutlich verbessern.

Die erfindungsgemäßen Zusammensetzungen und die Produkte aus dem erfindungsgemäßen Verfahren lassen sich vorteilhaft als Stabilisatoren für organisches Material, besonders organische Polymere, beispielsweise synthetische Polymere, gegen den schädigenden Einfluß von Wärme, Sauerstoff und/oder Licht verwenden. Beispiele für solche Polymere sind etwa der US-A-4 855 345, Spalte 4, Zeile 63, bis Spalte 7, Zeile 54, zu entnehmen.

Amin und säurebindendes Metallsalz (Komponenten b und c) können dem Phosphit oder Phosphonit durch übliche Mischvorgänge, oder beispielsweise durch gemeinsames Vermahlen zugesetzt werden.
Zweckmäßig werden sie der Lösung oder Schmelze des Phosphits oder Phosphonits vor dessen Kristallisation zugemischt, beispielsweise der aus der Synthese stammenden Lösung. Möglich ist auch, diese Komponenten während der Synthese oder einem der Edukte zuzusetzen.

Im erfindungsgemäßen Verfahren können Rohphosphit- oder Rohphosphonitlösungen eingesetzt werden, wie sie bei der Herstellung vor der Kristallisation anfallen.

In einer bevorzugten Ausführungsform liegen Amin und säurebindendes Metallsalz in der Lösung oder Schmelze vor, aus der das Phosphit oder Phosphonit kristallisiert wird. In diesem Fall beträgt die Menge an beigemischtem sterisch gehindertem Amin in der Lösung oder Schmelze meist 0,01 bis 100 Gew.-%; vorzugsweise werden 0,01 bis 50 Gew.-%, insbesondere 0,1 bis 25 Gew.-%, vor allem 0,5 bis 20 Gew.-% (jeweils bezogen auf Phosphit bzw. Phosphonit) eingesetzt. Die Menge an säurebindendem Metallsalz in der Lösung oder Schmelze beträgt zweckmäßig 0,05 bis 25 Gew.-% bezogen auf das Gesamtgewicht der Lösung oder Schmelze ohne Berücksichtigung eines eventuell vorhandenen Lösemittels, wie eingangs für das Produkt angegeben; vorzugsweise werden 0,05 bis 25 Gew.-% säurebindendes Metallsalz bezogen auf Phosphit bzw. Phosphonit eingesetzt.

Aus der Lösung oder Schmelze kann anschließend in bekannter Weise das kristalline Phosphit bzw. Phosphonit gewonnen werden, beispielsweise durch Abkühlen und/oder Konzentrieren. Es ist möglich, die Kristallisation durch den Eintrag von Impfkristallen zu beschleunigen. Ein Konzentrieren der Lösung kann beispielsweise durch Erhitzen, Anwendung von reduziertem Druck, Verwendung von Schleppmitteln und/oder Ausfrieren des Lösungsmittels (Cold Trapping) erreicht werden. Gegebenenfalls können weitere übliche Aufarbeitungsvorgänge wie Filtrieren, Trocknen oder Mahlen angeschlossen werden.

Das Produkt des erfindungsgemäßen Verfahrens ist ein Stoffgemisch enthaltend festes Phosphit bezw. Phosphonit, säurebindendes Metallsalz und Amin. Vorzugsweise enthält das Produkt des erfindungsgemäßen Verfahrens Mischkristalle aus Amin und Phosphit bzw. Phosphonit im Gemenge mit Kristallen des säurebindenden Metallsalzes. Bevorzugt machen diese Mischkristalle mindestens 50 Gew.-%, insbesondere mindestens 80 Gew.-% des Produktes aus.

Besonders bevorzugt ist ein Verfahren zur Stabilisierung eines kristallinen organischen Phosphits oder Phosphonits gegen Hydrolyse, dadurch gekennzeichnet, daß eine auf 50-100°C temperierte homogene Schmelze aus Phosphit bzw. Phosphonit, einem Lösungsmittel oder Lösungsmittelgemisch und 0,1 bis 100 Gew.-% (bezogen auf Phosphit bzw. Phosphonit) eines Amins, in welcher 0,05 bis 25 Gew.-% säurebindendes Metallsalz (bezogen auf Phosphit bzw. Phosphonit) dispergiert sind, in ein flüssiges Kristallisationsmedium gegeben wird, dessen Temperatur während der Zugabe um 10-70°C unter der Temperatur der Schmelze gehalten wird.

Die Schmelze ist in diesem Verfahren das flüssige Gemisch enthaltend Amin, Lösungsmittel und das zu stabilisierende Phosphit bezw. Phosphonit. Die Schmelze kann wenig oder viel Lösungsmittel enthalten, beispielsweise 20 oder 500 Gew.-% (bezogen auf Phosphit bezw. Phosphonit), und kann daher auch den Charakter einer Lösung haben. Wichtig dabei ist, daß die Schmelze homogen ist, d.h. keine der genannten Komponenten mehr kristallin ist und auch keine Trennung in 2 oder mehr flüssige Phasen erfolgt. Als Amin kann eine Einzelverbindung oder ein Gemisch von Verbindungen verwendet werden.

Das säurebindende Metallsalz wird der Mischung zweckmäßig vor oder während der Homogenisierung in feinkörniger Form zugegeben und auf bekannte Weise dispergiert, beispielsweise durch Rühren.

Als Lösungsmittel können grundsätzlich alle organischen Verbindungen oder Verbindungsgemische eingesetzt werden, welche im Temperaturbereich von 10 bis 60°C unter Normaldruck flüssig sind, keine Solvolyse bewirken und oberhalb von 50°C, gegebenenfalls bis 100°C, eine ausreichende Menge an festem Phosphit bezw. Phosphonit zu lösen vermögen oder mit dem geschmolzenen Phosphit bezw. Phosphonit ausreichend mischbar sind. Ausreichende Löslichkeit bezw. Mischbarkeit liegt beispielsweise dann vor, wenn das homogene flüssige Gemisch bis 15, vor allem bis 50 Gew.-% Phosphit bezw. Phosphonit enthalten kann. Als Lösungsmittel geeignet sind beispielsweise Alkohole oder Kohlenwasserstoffe oder deren Gemische.

Zweckmäßig wird als Lösungsmittel in der Schmelze eine Verbindung oder ein Gemisch zweier Verbindungen verwendet. Dabei wird das Hauptlösungsmittel in einer Menge von 20 bis 500 Gew.-% bezogen auf Phosphit bezw. Phosphonit, und das weitere Lösungsmittel in einer Menge von 0-50 Gew.-% bezogen auf das Hauptlösungsmittel eingesetzt. Vorzugsweise enthält die Schmelze als Hauptlösungsmittel einen Alkohol oder einen Kohlenwasserstoff in einer Menge von 20 bis 500 Gew.-% bezogen auf Phosphit bezw. Phosphonit, und ein weiteres Lösungsmittel in einer Menge von 0-50, vor allem 0-20 Gew.-%, bezogen auf das Hauptlösungsmittel.
Möglich ist auch der Einsatz eines Gemisches von Alkoholen oder eines Gemisches von Kohlenwasserstoffen.

Geeignete Alkohole sind beispielsweise niedere Alkohole wie $C_1$-$C_5$-Alkanole, vor allem $C_1$-$C_3$-Alkanole wie Methanol, Ethanol, Propanol oder Isopropanol. Besonders geeignet sind Isopropanol und Methanol.
Geeignete Kohlenwasserstoffe sind beispielsweise $C_6$-$C_{13}$-Alkane, Cycloalkane oder alkylierte Cycloalkane mit 6 bis 12 Kohlenstoffatomen, Benzol, oder Alkylaromaten mit 6 bis 10 Kohlenstoffatomen; besonders geeignet sind Toluol, Ligroin, Petrolether, Xylol; vor allem ToluoL

Als weiteres Lösungsmittel wird häufig ein Kohlenwasserstoff oder ein Kohlenwasserstoffgemisch eingesetzt, wenn das Hauptlösungsmittel ein Alkohol, oder ein Alkohol eingesetzt, wenn das Hauptlösungsmittel ein Kohlenwasserstoff ist. Geeignet sind dabei die oben aufgeführten Alkohole und Kohlenwasserstoffe.

Vorzugsweise beträgt die Temperatur der Schmelze 55-90°C, vor allem 60-80°C.

Im bevorzugten Verfahren beträgt der Temperaturunterschied zwischen Schmelze und Kristallisationsmedium zweckmäßig mindestens 20°C, beispielsweise 30-70°C, vor allem 40-60°C.

Vorzugsweise wird das Kristallisationsmedium auf einer Temperatur gehalten, die mindestens 10°C, beispielsweise 10-60°C, unterhalb der resultierenden Liquidustemperatur liegt. Vorzugsweise liegt die Temperatur des Kristallisationsmediums 20-60°C unterhalb der resultierenden Liquidustemperatur.

Die resultierende Liquidustemperatur ist die Temperatur, bei der sich eine aus Schmelze und Kristallisationsmedium gebildete homogene Phase im thermodynamischen Gleichgewicht mit Phosphit- bzw. Phosphonitkristallen befindet; unterhalb dieser Temperatur beginnt die Kristallisation, oberhalb bildet die Mischung eine homogene Schmelze. Diese Temperatur wird in der Praxis zweckmäßig durch Mischversuche ermittelt, beispielsweise mit Hilfe kalorimetrischer (z.B. der DSC) und/oder optischer Methoden.

Zweckmäßig werden als Kristallisationsmedium bezogen auf Phosphit bezw. Phosphonit in der Schmelze

80-800 Gew.-%, besonders 100-500 Gew.-%, organisches Lösungsmittel eingesetzt.

Als Kristallisationsmedium lassen sich vorteilhaft Alkohole verwenden; so werden beispielsweise ein $C_1$-$C_5$-Alkanol oder ein Gemisch verschiedener $C_1$-$C_5$-Alkanole eingesetzt. Vorzugsweise werden als Kristallisationsmedium $C_1$-$C_3$-Alkanole verwendet wie Methanol, Ethanol, Propanol oder Isopropanol.

Dem Kristallisationsmedium werden vorteilhaft Impfkristalle zugesetzt. Vorzugsweise besteht das Kristallisationsmedium daher aus einer Suspension von 2 bis 20 Gew.-% kristallinem Phosphit bezw. Phosphonit, bezogen auf Phosphit bezw. Phosphonit in der Schmelze. Darüberhinaus ist es vorteilhaft, wenn das Kristallisationsmedium zu 50-100 % mit dem Amin gesättigt ist, wobei 100 % Sättigung einer Aminkonzentration entsprechen, bei der gelöstes und festes Amin nebeneinander vorliegen können.

Im Allgemeinen enthält die Schmelze 0,1 bis 50 Gew.-% Amin (Komponente b) bezogen auf Phosphit bezw. Phosphonit; vorzugsweise werden 0,2 bis 25 Gew.-%, vor allem 0,5 bis 20 Gew.-%, insbesondere 0,5 bis 10 Gew.-% eingesetzt (bezogen auf Phosphit bezw. Phosphonit in der Schmelze).

Das säurebindende Metallsalz (Komponente c) ist der Schmelze meist in einer Menge von 0,05 bis 20 Gew.-%, besonders 0,05 bis 15 Gew.-%, vor allem 0,1 bis 10 Gew.-% (bezogen auf Phosphit bezw. Phosphonit in der Schmelze) zugesetzt.

Während des Zudosierens von Schmelze und darin dispergierter Komponente (c) wird das Kristallisationsmedium zweckmäßig gerührt. Nach der Vereinigung der beiden Mischungen kann die weitere Aufarbeitung in an sich bekannter Weise vorgenommen werden, z.B. durch Kühlen auf 10-15°C und Isolierung des kristallinen Produktes.

Das stabilisierte Phosphit bezw. Phosphonit wird im Allgemeinen als Pulver erhalten, worin Amin und säurebindendes Metallsalz homogen verteilt sind. Es enthält typischerweise 0,01 bis 20, besonders 0,05 bis 10, vor allem 0,1 bis 5 Gew.-% Amin (bezogen auf Phosphit bezw. Phosphonit). Das in der Schmelze dispergierte säurebindende Metallsalz befindet sich nach der Kristallisation oft praktisch quantitativ im Produkt; bei einer zusätzlichen Filtration der Schmelze, die beispielsweise aus apparativen Gründen zweckmäßig sein kann, kann es auch zu einer, oft geringfügigen, Verringerung des Gehaltes an säurebindendem Metallsalz kommen.

Mit Hilfe des bevorzugten Verfahrens können besonders vorteilhaft die oben aufgeführten Phosphite Ph-1, Ph-2, Ph-4, Ph-5, Ph-6, Ph-7 und Ph-8, sowie das Phosphonit Ph-3 stabilisiert werden.

Die nachfolgenden Beispiele illustrieren das erfindungsgemäße Verfahren weiter. Alle Angaben in Teilen oder Prozenten beziehen sich, ebenso wie in der übrigen Beschreibung und in den Ansprüchen, auf das Gewicht, sofern nichts anderes angegeben ist. Soweit Prozentangaben auf Phosphit oder Phosphonit bezogen sind, ist damit Phosphit oder Phosphonit in der Schmelze gemeint, wenn nicht ausdrücklich eine andere Bezugsmenge genannt ist.

In den Beispielen verwendete Amine:

Amin A: Triisopropanolamin;

Amin C: Bis(2,2,6,6-Tetramethylpiperidin-4-yl)sebacat

Amin H: Verbindung der Formel

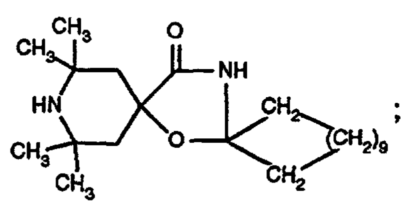

Amin J: Verbindung der Formel

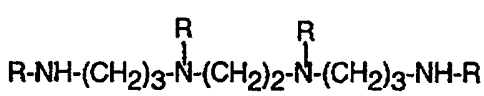

mit R =

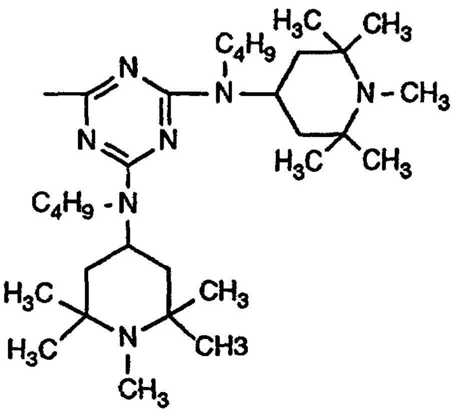

; CAS-No. 106990-43-6;

Amin N: Oligomer der Formel

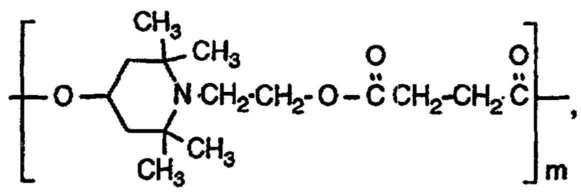

worin m eine Zahl aus dem Bereich von 8 bis 11 darstellt; CAS-No. 65447-77-0;
Amin P: Oligomer der Formel

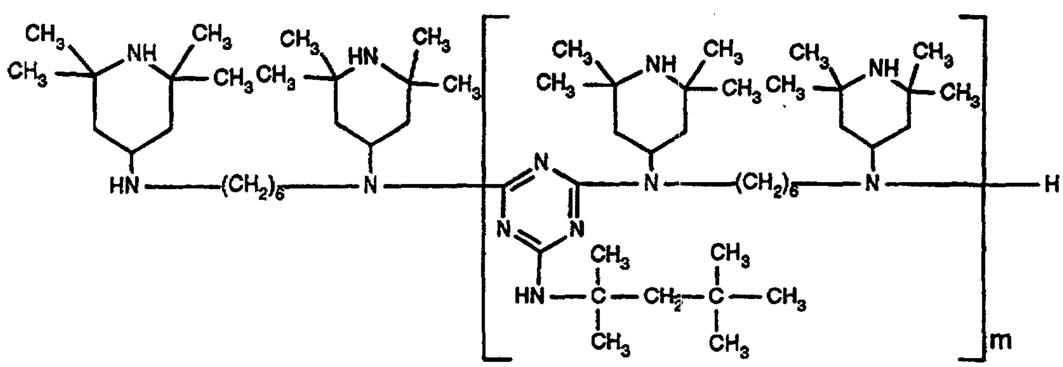

worin m eine Zahl aus dem Bereich von 3 bis 4 darstellt (CAS-No. 70624-18-9);
Amin Q: Oligomer der Formel

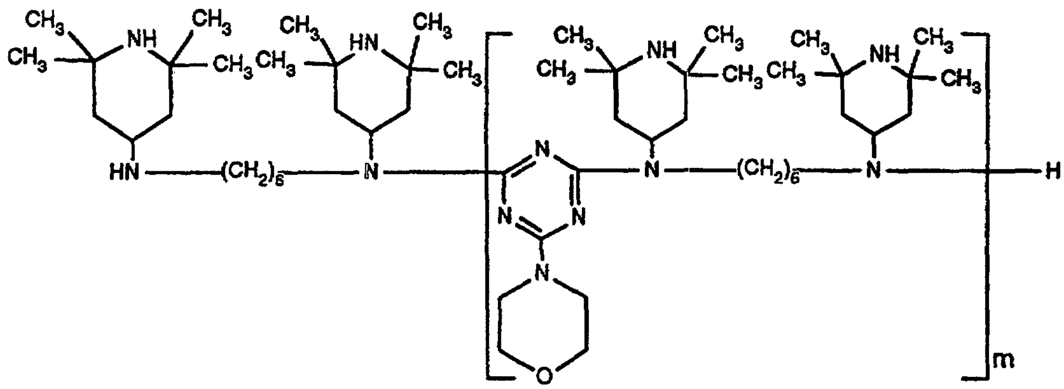

(Hersteller Cytec Inc., USA);
Amin U: Umsetzungsprodukt von $H_2N-(CH_2)_2-NH-(CH_2)_2-NH_2$ mit

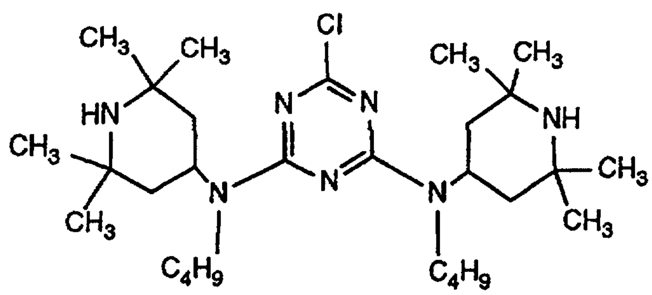

und $Br-(CH_2)_2-Br$ (Hersteller: Sigma);
Amin X: 2,2,6,6-Tetramethylpiperidin;
Amin Y: 4-Hydroxy-2,2,6,6-tetramethylpiperidin (HTMP);
Amin Z: 1,3,5-Trimethyl-2,4,6-triazin.

Bei dem in einigen Beispielen als säurebindendes Metallsalz eingesetzten Zirkoniumcarbonat (Zr-Carb.) handelt es sich um basisches Zirkoniumcarbonat, bezogen von Tilcom, Großbritannien.

Die Strukturformeln der in den Beispielen verwendeten Phosphite, Phosphonite und Amine sind, wo nicht im Beispiel oder in dieser Liste angegeben, weiter oben im Text aufgeführt.

Beispiel 1: 300 g des Phosphits Ph-1 werden zusammen mit 225 g Isopropanol, 2,25 g Toluol, 6,0 g des Metallsalzes der Formel IXc

$$Mg_{4,5}Al_2(OH)_{13}\cdot CO_3\cdot 3,5\ H_2O, \qquad \text{(IXc)}$$

(Stabilisator IXc; Kyowa Chem. Ind., Osaka, Japan) und 30 g Amin N unter Rühren auf 70-75°C gebracht. Die resultierende homogene Schmelze mit dispergiertem Metallsalz wird einer Grobfiltrierung unterzogen und anschließend innerhalb ca. 1 Stunde unter Rühren in 450 g Isopropanol gegeben, dessen Temperatur während dieses Vorganges durch Kühlen auf 20-30°C gehalten wird. Die Mischung wird anschließend auf 10-15°C gekühlt und in diesem Temperaturbereich für weitere 3 Stunden gerührt. Daraufhin wird das kristalline Produkt abfiltriert und bei 60°C unter reduziertem Druck getrocknet (Probe d). Die Elementaranalyse ergibt für das trockene Produkt einen Gehalt von 9,0 % Amin N und 0,19 % Metallsalz (bezogen auf Phosphit).

Drei als Vergleich dienende Proben werden nach der oben beschriebenen Methode kristallisiert, wobei jedoch in einer Probe das Amin (Probe c), in einer anderen Probe das Metallsalz (Probe b), und in der dritten Probe beide Zusätze weggelassen werden (Probe a).

Eine weitere Probe (e) wird nach der oben beschriebenen Methode kristallisiert, wobei jedoch der Schmelze

zusätzlich 6,0 g Amin P zugesetzt werden. Die Elementaranalyse ergibt für das trockene Produkt einen Gehalt von 9 % Amin N, 0,5 % Amin P und 0,19 % Metallsalz (bezogen auf Phosphit).

Gleiche Anteile des Produktes werden anschließend dem folgenden Test auf Hydrolysebeständigkeit unterworfen: Die Proben werden bei 50°C und 75 % Luftfeuchtigkeit gelagert; in regelmäßigen Abständen wird mit Hilfe der Gaschromatographie der Restgehalt an Phosphit Ph-1 ermittelt (Beginn = 100 %).

Die Ergebnisse sind der nachfolgenden Tabelle 1 zu entnehmen.

Tab. 1:

| Zersetzung des Phosphits Ph-1 bei Lagerung bei 50°C und 75 % Luftfeuchtigkeit | | | | | |
|---|---|---|---|---|---|
| Probe | Stabilisator einges. | Stab. im Produkt | % Zersetzung nach | | |
| | | | 0h | 24h | 41h |
| a | keiner | keiner | 0 | 100 | 100 |
| b | 10% Amin N | 9,0 % Amin N | 0 | 13,6 | 35,9 |
| c | 2% IXc | 1,7 % IXc | 0 | 11,5 | 77,8 |
| d | 10% Amin N +2% IXc | 9,0 % Amin N + 0,19 % IXc | 0 | 5,2 | 17,0 |
| e | 10% Amin N +2% IXc + 2 % Amin P | 9,0 % Amin N + 0,19 % IXc + 0,5 % Amin P | 0 | 6,5 | 15,0 |

Die Ergebnisse in Tabelle 1 zeigen, daß die erfindungsgemäßen Phosphitproben d und e eine hervorragende Beständigkeit gegen Hydrolyse aufweisen.

Beispiel 2: Stabilisierter Phosphit Ph-1 wird nach der in Beispiel 1 beschriebenen

Methode hergestellt und auf Hydrolysestabilität getestet; der Gehalt an unzersetztem Phosphit nach 24 h, 48 h und 72 h Lagerung wird mittels $^{31}$P-NMR ermittelt. Menge und Typ von eingesetztem Amin und Metallsalz sowie die Testergebnisse sind nachfolgender Tabelle 2 zu entnehmen.

Tab.2:

| Zersetzung des Phosphits Ph-1 bei Lagerung bei 50°C und 75 % Luftfeuchtigkeit; Mengenangaben jeweils bezogen auf Phosphit | | | | | | |
|---|---|---|---|---|---|---|
| Metallsalz bezügl. Ph-1 | | Amin bezüglich Ph-1 | | % Phosphitgehalt nach | | |
| eingesetzt | im Produkt | eingesetzt | im Produkt | 24h | 48h | 72h |
| 0 (unstabilisiert) | | 0 | 0 | 48,3 | 0 | 0 |
| 0 | 0 | 10% Amin N | 8% | 79,4 | 21,2 | 0 |
| 0 | 0 | 10% Amin P | 1,4% | 88,5 | 22,2 | 0 |
| 0 | 0 | 10% Amin A | 0,35% | 60,4 | 15,6 | 0 |
| 0 | 0 | 10% Piperazin | 0,35% | 62,1 | 20,2 | 0 |
| 2% IXc | 1,1% | 0 | 0 | 85,7 | 20,3 | 0 |
| 10% IXc | 1,3% | 10% Piperazin | 0,02% | 90,1 | 81,3 | 60,2 |
| 10% IXc | 1,2% | 10% Amin X | 0,03% | 85,8 | 75,2 | 51 |
| 10% IXc | 1,4% | 10% Amin Z | 0,04% | 87 | 78,1 | 52,4 |
| 10% IXc | 1,6% | 10% Dibutylamin | 0,01% | 90,2 | 81,5 | 60,5 |
| 10% IXc | 1,4% | 10% Amin J | 0,2% | 100 | 95,8 | 80,4 |
| 10% IXc | 1,5% | 10% Amin C | 0,18% | 94,5 | 89,8 | 72 |
| 10% IXc | 1,3% | 10% Amin H | 0,19% | 98,4 | 92,1 | 75,9 |
| 10% IXc | 1,2% | 10 Amin U | 0,15% | 96,3 | 90,8 | 74,1 |
| 10% IXc | 1,4% | 10 Amin Q | 0,21% | 100 | 94,2 | 78,3 |
| 0,5% IXc | 0,06% | 0,5% Piperazin | 0,015% | 85,3 | 74,1 | 50,9 |
| 0,5% IXc | 0,07% | 0,5% Amin X | 0,02% | 79,7 | 68,9 | 45,2 |
| 0,5% IXc | 0,08% | 0,5% Amin Z | 0,01% | 81,2 | 72,6 | 46,1 |
| 0,5% IXc | 0,06% | 0,5% Dibutylamin | 0,01% | 84 | 75,9 | 54,2 |

Tab.2: (fortgesetzt)

| Zersetzung des Phosphits Ph-1 bei Lagerung bei 50°C und 75 % Luftfeuchtigkeit; Mengenangaben jeweils bezogen auf Phosphit | | | | | | |
|---|---|---|---|---|---|---|
| Metallsalz bezügl. Ph-1 | | Amin bezüglich Ph-1 | | % Phosphitgehalt nach | | |
| eingesetzt | im Produkt | eingesetzt | im Produkt | 24h | 48h | 72h |
| 0,5% IXc | 0,07% | 0,5% Amin J | 0,02% | 98,4 | 90,8 | 75,2 |
| 0,5% IXc | 0,07% | 0,5% Amin C | 0,03% | 90 | 84,2 | 66 |
| 0,5% IXc | 0,08% | 0,5% Amin H | 0,02% | 93,3 | 87,4 | 71 |
| 0,5% IXc | 0,09% | 0,5% Amin U | 0,02% | 91,5 | 85,7 | 69,1 |
| 0,5% IXc | 0,06% | 0,5% Amin Q | 0,02% | 97,3 | 88,4 | 71,4 |
| 2% IXc | 1,1% | 10% Amin N | 8% | 91,7 | 77,8 | 63,8 |
| 0,5% IXc | 0,2% | 0,5% Amin N | 0,3% | 88,3 | 70,1 | 53,2 |
| 10% ZnO | 1,4% | 10% Amin A | 0,22% | 85,4 | 73,2 | 48,5 |
| 10% ZnO | 1,3% | 10% Amin N | 8,3% | 89,8 | 75 | 59,4 |
| 10% ZnO | 1,5% | 10% Amin P | 0,24% | 98,6 | 90,4 | 72,2 |
| 0,5% ZnO | 0,06% | 0,5% Amin A | 0,05% | 80,1 | 61,8 | 35,4 |
| 0,5% ZnO | 0,08% | 0,5% Amin N | 0,21% | 84,6 | 66,4 | 49,9 |
| 0,5% ZnO | 0,07% | 0,5% Amin P | 0,04% | 95,8 | 86,3 | 69,1 |
| 10% CaO | 1,3% | 10% Piperazin | 0,03% | 85 | 75,4 | 53,2 |
| 10% CaO | 1,4% | 10% Amin P | 0,27% | 97,2 | 89,8 | 71,4 |
| 10% CaO | 1,2% | 10% Amin J | 0,26% | 95,4 | 86,9 | 68,1 |
| 10% CaO | 1,2% | 10% Amin U | 0,27% | 91,8 | 82,4 | 61,9 |
| 0,5% CaO | 0,1% | 0,5% Piperazin | 0,02% | 78 | 68,8 | 42 |
| 0,5% CaO | 0,08% | 0,5% Amin P | 0,03% | 90,6 | 83,4 | 65,9 |
| 0,5% CaO | 0,07% | 0,5% Amin J | 0,02% | 87,9 | 79,1 | 60 |
| 0,5% CaO | 0,09% | 0,5% Amin U | 0,03% | 84,1 | 75,9 | 53 |
| 10% MgO | 1,3% | 10% Amin J | 0,25% | 94,8 | 88,1 | 70 |
| 10% MgO | 1,2% | 10% Amin C | 0,23% | 88,2 | 79,2 | 60,2 |
| 0,5% MgO | 0,08% | 0,5% Amin J | 0,02% | 86,8 | 78 | 58 |
| 10% $CaCO_3$ | 1,3% | 10% Amin P | 0,25% | 90,8 | 83 | 50,4 |
| 10% $CaCO_3$ | 1,4% | 10% Amin H | 0,26% | 89,4 | 81,1 | 43,7 |
| 0,5% $CaCO_3$ | 0,08% | 0,5% Amin P | 0,02% | 85,4 | 78,4 | 42,9 |
| 10% $Ca(OH)_2$ | 1,6% | 10% Amin Q | 0,27% | 90,4 | 82,6 | 48,7 |
| 2% Zr-Carb. | 1,2% | 10% Amin N | 6,3% | 85,6 | 66 | 43,8 |
| 0,5% Zr-Carb. | 0,15% | 0,5% Amin N | 0,23% | 80,4 | 57,3 | 32,5 |
| 2% $Al(OH)_3$ | 1,1% | 10% Amin N | 6,3% | 76,3 | 50,6 | 42,3 |
| 0,5% $Al(OH)_3$ | 0,2% | 0,5% Amin N | 0,25% | 73,2 | 41,8 | 25,6 |

Beispiel 3: Stabilisierter Phosphit Ph-2 wird nach der in Beispiel 1 beschriebenen

Methode hergestellt. Stabilität gegen Hydrolyse wird durch Lagerung bei 70°C und 75 % Luftfeuchtigkeit und Bestimmung des Gehaltes an unzersetztem Phosphit nach 24 h, 48 h und 72 h Lagerung mittels $^{31}$P-NMR getestet. Menge und Typ von eingesetztem Amin und Metallsalz sowie die Testergebnisse sind nachfolgender Tabelle 3 zu entnehmen.

Tab.3:

| Zersetzung des Phosphits Ph-2 bei Lagerung bei 70°C und 75 % Luftfeuchtigkeit; Mengenangaben jeweils bezogen auf Phosphit | | | | | | |
|---|---|---|---|---|---|---|
| Metallsalz bezügl. eingesetzt | Ph-2 im Produkt | Amin bezüglich eingesetzt | Ph-2 im Produkt | % Phosphitgehalt nach | | |
| | | | | 24h | 48h | 72h |
| 0 (unstabilisiert) | | 0 | 0 | 95,4 | 60,3 | 0 |
| 0 | 0 | 10% Amin J | 1,6% | 97,1 | 86 | 21,4 |
| 0 | 0 | 10% Amin N | 8,7% | 97,2 | 85,3 | 20,6 |
| 0 | 0 | 10% Amin A | 1,55 | 80,2 | 25,4 | 0 |
| 10% IXc | 3,8% | 0 | 0 | 90,2 | 40,9 | 0 |
| 10% IXc | 3,6% | 10% Amin J | 1,5% | 100 | 96 | 74,1 |
| 10 % IXc | 3,7% | 10% Amin N | 8,7% | 100 | 95,3 | 70,2 |
| 10 % IXc | 3,6% | 10% Amin A | 0,9% | 100 | 80,6 | 45,3 |
| 0,5 % IXc | 0,26% | 0,5% Amin J | 0,03% | 100 | 89,4 | 50,9 |
| 0,5 % IXc | 0,27% | 0,5% Amin N | 0,3% | 100 | 88,8 | 48,7 |
| 0,5 % IXc | 0,25% | 0,5% Amin A | 0,07% | 100 | 70,8 | 30,3 |
| 10% Zr-Carb. | 3,5% | 10% Amin J | 1,4% | 100 | 89,4 | 55,7 |
| 10% Zr-Carb. | 3,4% | 10% Amin N | 9% | 100 | 88,8 | 53 |
| 10% Zr-Carb. | 3,6% | 10% Amin A | 1,2% | 100 | 73,2 | 38,6 |
| 0,5% Zr-Carb. | 0,23% | 0,5% Amin J | 0,03% | 100 | 82,1 | 47,9 |
| 0,5% Zr-Carb. | 0,24% | 0,5% Amin N | 0,3% | 100 | 81,6 | 45 |
| 0,5% Zr-Carb. | 0,25% | 0,5% Amin A | 0,06% | 100 | 61,9 | 29,7 |
| 10% CaO | 2,9% | 10% Amin J | 1,2% | 100 | 93,3 | 62,8 |
| 10% CaO | 3,1% | 10% Amin N | 8,6% | 100 | 92,4 | 61,2 |
| 10% CaO | 3,3% | 10% Amin A | 1,1% | 100 | 86,6 | 41,4 |
| 0,5% CaO | 0,24% | 0,5% Amin J | 0,04% | 100 | 85,4 | 48,4 |
| 0,5% CaO | 0,25% | 0,5% Amin N | 0,35% | 100 | 83,9 | 47,1 |
| 0,5% CaO | 0,25% | 0,5% Amin A | 0,06% | 100 | 70,8 | 30 |

Beispiel 4: Stabilisierter Phosphonit Ph-3 wird nach der in Beispiel 1 beschriebenen

Methode hergestellt. Stabilität gegen Hydrolyse wird durch Lagerung bei 50°C und 75 % Luftfeuchtigkeit und Bestimmung des Gehaltes an unzersetztem Phosphonit nach 24 h und 48 h Lagerung mittels $^{31}$P-NMR getestet. Menge und Typ von eingesetztem Amin und Metallsalz sowie die Testergebnisse sind nachfolgender Tabelle 4 zu entnehmen.

Tab.4:

| Zersetzung des Phosphonits Ph-3 bei Lagerung bei 50°C und 75 % Luftfeuchtigkeit; Mengenangaben jeweils bezogen auf Phosphonit | | | | | |
|---|---|---|---|---|---|
| Metallsalz bezügl. eingesetzt | Ph-3 im Produkt | Amin bezüglich eingesetzt | Ph-3 im Produkt | % Phosphonitgehalt nach | |
| | | | | 24h | 48h |
| 0 (unstabilisiert) | | 0 | 0 | 45 | 20,3 |
| 0 | 0 | 10% Amin J | 6,0%% | 60,8 | 40,7 |
| 0 | 0 | 10% Amin N | 10% | 64,9 | 46,3 |
| 0 | 0 | 10% Amin A | 6,1% | 55,4 | 32,6 |
| 10% IXc | 7,9% | 0 | 0 | 61,2 | 44,7 |
| 10% IXc | 7,4% | 10% Amin J | 5,8% | 84,6 | 72,1 |
| 10 % IXc | 7,5% | 10% Amin N | 10% | 90,5 | 78,4 |
| 10 % IXc | 7,3% | 10% Amin A | 6,0% | 72,3 | 52,4 |

Tab.4: (fortgesetzt)

| Zersetzung des Phosphonits Ph-3 bei Lagerung bei 50°C und 75 % Luftfeuchtigkeit; Mengenangaben jeweils bezogen auf Phosphonit | | | | | |
|---|---|---|---|---|---|
| Metallsalz bezügl. eingesetzt | Ph-3 im Produkt | Amin bezüglich eingesetzt | Ph-3 im Produkt | % Phosphonitgehalt nach | |
| | | | | 24h | 48h |
| 0,5 % IXc | 0,4% | 0,5% Amin J | 0,4% | 76,6 | 64,6 |
| 0,5 % IXc | 0,4% | 0,5% Amin N | 0,5% | 82,3 | 69,1 |
| 10% Zr-Carb. | 7,5% | 10% Amin J | 5,7% | 79,4 | 67,5 |
| 10% Zr-Carb. | 7,5% | 10% Amin N | 10% | 84,9 | 67,5 |
| 0,5% Zr-Carb. | 0,35% | 0,5% Amin J | 0,4% | 71,3 | 60 |
| 0,5% Zr-Carb. | 0,35% | 0,5% Amin N | 0,5% | 77,4 | 64,7 |
| 10% CaO | 7,6% | 10% Amin J | 5,8% | 79,8 | 67 |
| 10% CaO | 7,5% | 10% Amin N | 10% | 85,4 | 74,1 |
| 0,5% CaO | 0,3% | 0,5% Amin J | 0,4% | 71,6 | 61,2 |
| 0,5% CaO | 0,3% | 0,5% Amin N | 0,5% | 78 | 65 |

Die Testergebnisse zeigen eine deutlich höhere Beständigkeit der erfindungsgemäß stabilisierten Phosphite und Phosphonite gegenüber dem unstabilisierten Produkt und gegenüber nur durch Zusatz von Amin oder Metallsalz stabilisierten Produkten.

## Patentansprüche

1. Verfahren zur Stabilisierung eines organischen Phosphits oder Phosphonits oder eines Gemisches organischer Phosphite oder Phosphonite gegen Hydrolyse, dadurch gekennzeichnet, daß man als Stabilisator (b) ein organisches Amin und (c) ein säurebindendes Metallsalz zusetzt, so daß das stabilisierte Phosphit oder Phosphonit 0,01 bis 50 Gew.-% der aminischen Komponente (b) und 0,01 bis 25 Gew.-% säurebindendes Metallsalz (c) (jeweils bezogen auf das Gesamtgewicht) enthält.

2. Verfahren gemäß Anspruch 1, worin die Komponenten (b) und (c) der Lösung oder Schmelze des Phosphits oder Phosphonits vor dessen Kristallisation zugemischt werden.

3. Verfahren gemäß Anspruch 2, dadurch gekennzeichnet, daß eine auf 50-100°C temperierte homogene Schmelze aus Phosphit bzw. Phosphonit, einem Lösungsmittel oder Lösungsmittelgemisch und 0,1 bis 100 Gew.-% (bezogen auf Phosphit bzw. Phosphonit) eines Amins, in welcher 0,05 bis 25 Gew.-% säurebindendes Metallsalz (bezogen auf Phosphit bzw. Phosphonit) dispergiert sind, in ein flüssiges Kristallisationsmedium gegeben wird, dessen Temperatur während der Zugabe um 10-70°C unter der Temperatur der Schmelze gehalten wird.

4. Zusammensetzung enthaltend

   (a) 25 bis 99 Gew.-% organisches Phosphit oder Phosphonit,
   (b) 0,01 bis 50 Gew.-% organisches Amin und
   (c) 0,01 bis 25 Gew.-% säurebindendes Metallsalz,

   jeweils bezogen auf das Gesamtgewicht der Zusammensetzung, und enthaltend neben den Komponenten (a), (b) und (c) als weitere Komponenten keine organischen Polymere.

5. Zusammensetzung gemäß Anspruch 4 enthaltend 40-99 Gew.-% Komponente (a), 0,01 bis 25 Gew.-% Komponente (b) und 0,05 bis 15 Gew.-% Komponente (c), jeweils bezogen auf das Gesamtgewicht der Zusammensetzung.

6. Zusammensetzung gemäß Anspruch 4 enthaltend als Komponente (a) ein organisches Phosphit oder Phosphonit, das bei 20°C ein Feststoff ist.

**7.** Zusammensetzung gemäß Anspruch 4 enthaltend als Komponente (c) ein säurebindendes Metallsalz ausgewählt aus Carbonaten, Bicarbonaten, Carboxylaten, Oxiden, Hydroxiden, Phosphiten oder Boraten der Metalle Lithium, Natrium, Kalium, Kupfer, Zink, Magnesium, Calcium, Strontium, Barium, Aluminium und/oder Zirkonium, oder entsprechenden Mischkristallisaten, sowie Hydrotalciten und Zeolithen.

**8.** Zusammensetzung gemäß Anspruch 4 enthaltend als Komponente (b) ein Amin der Formel I

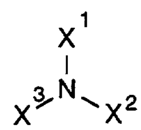
(I)

worin $X^1$ und $X^2$ unabhängig voneinander H, $C_1$-$C_{20}$-Alkyl, durch eine oder mehrere -O-unterbrochenes und optional durch ein oder mehrere Hydroxy-Gruppen substituiertes $C_4$-$C_{20}$-Alkyl, oder $C_2$-$C_{20}$-Hydroxyalkyl, und $X^3$ $C_2$-$C_{20}$-Alkyl, durch eine oder mehrere -O- unterbrochenes und optional durch ein oder mehrere Hydroxy-Gruppen substituiertes $C_4$-$C_{20}$-Alkyl, $-(CH_2)_m-NX^1X^2$, oder $C_2$-$C_{20}$-Hydroxyalkyl darstellen, oder worin $X^2$ und $X^3$ gemeinsam $-(CH_2)_m-$, $-C_2H_4-O-C_2H_4-$ oder $-C_2H_4-NX^1-C_2H_4-$ darstellen, wobei m eine ganze Zahl aus dem Bereich 4 bis 6 ist und $X^1$ und $X^2$ die oben angegebenen Bedeutungen haben;
oder ein aromatisches Amin der Formel Ia

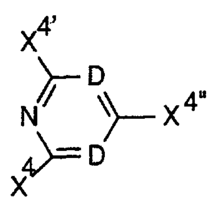
(Ia)

worin D für ein Stickstoffatom oder eine Gruppe $-CX^5-$ steht und worin $X^4$, $X^{4'}$, $X^{4''}$, und $X^5$ unabhängig voneinander Wasserstoff oder $C_1$-$C_4$-Alkyl sind;
oder ein cyclisches sterisch gehindertes Amin aus der Reihe der Derivate von Polyalkylpiperidinen oder -piperazinen, die mindestens eine Gruppe der Formeln II oder III

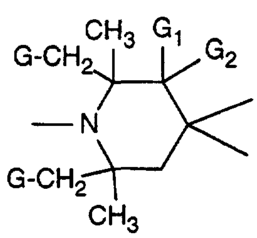
(II)

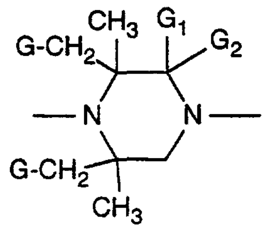
(III)

enthalten, worin G Wasserstoff oder Methyl ist und $G_1$ und $G_2$ Wasserstoff, Methyl oder gemeinsam =O bedeuten.

**9.** Zusammensetzung gemäß Anspruch 8 enthaltend als Komponente (b) ein sterisch gehindertes Amin aus der Reihe der Derivate von Polyalkylpiperidinen, deren Molekulargewicht bzw. mittleres Molekulargewicht $\overline{M}_n$ im Bereich von 300 bis 10000 liegt.

**10.** Verwendung eines organischen Amins (b) in Kombination mit einem säurebindenden Metallsalz (c) als Hydrolysestabilisator für organische Phosphite oder Phosphonite (a) in Abwesenheit von organischen Polymeren als weiteren Komponenten neben den Komponenten (a), (b) und (c).

**11.** Gegen Hydrolyse stabilisiertes organisches Phosphit oder Phosphonit, erhältlich nach einem Verfahren gemäß Ansprüchen 1 bis 3.

## Claims

**1.** A process for stabilizing an organic phosphite or phosphonite or a mixture of organic phosphites or phosphonites against hydrolysis, which comprises adding, as stabilizer, (b) an organic amine and (c) an acid-binding metal salt, so that the stabilized phosphite or phosphonite comprises from 0.01 to 50% by weight of the aminic component (b) and from 0.01 to 25% by weight of acid-binding metal salt (c) (based in each case on the total weight).

**2.** A process according to claim 1, wherein components (b) and (c) are added to the solution or melt of the phosphite or phosphonite prior to the crystallization thereof.

**3.** A process according to claim 2, wherein a homogeneous melt, heated to 50 to 100°C, composed of phosphite or phosphonite, of a solvent or solvent mixture, and of from 0.1 to 100% by weight (based on phosphite or phosphonite) of an amine, in which melt from 0.05 to 25% by weight of acid-binding metal salt (based on phosphite or phosphonite) have been dispersed, to a liquid crystallization medium whose temperature during the addition is maintained at 10-70°c below the temperature of the melt.

**4.** A composition comprising

(a) from 25 to 99% by weight of organic phosphite or phosphonite,
(b) from 0.01 to 50% by weight of organic amine and
(c) from 0.01 to 25% by weight of acid-binding metal salt, in each case based on the total weight of the composition, and comprising, besides components (a), (b) and (c), no organic polymers as further components.

**5.** A composition according to claim 4, comprising from 40 to 99% by weight of component (a), from 0.01 to 25% by weight of component (b) and from 0.05 to 15% by weight of component (c), in each case based on the total weight of the composition.

**6.** A composition according to claim 4, wherein component (a) is an organic phosphite or phosphonite which is solid at 20°C.

**7.** A composition according to claim 4, wherein component (c) is an acid-binding metal salt selected from the group consisting of carbonates, bicarbonates, carboxylates, oxides, hydroxides, phosphites or borates of the metals lithium, sodium, potassium, copper, zinc, magnesium, calcium, strontium, barium, aluminium, and/or zirconium, or the corresponding mixed crystals, or else hydrotalcites and zeolites.

**8.** A composition according to claim 4, comprising, as component (b), an amine of the formula I

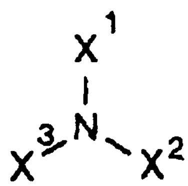

(I)

in which $X^1$ and $X^2$, independently of one another, are H, $C_1$-$C_{20}$alkyl, $C_4$-$C_{20}$alkyl interrupted by one or more -O- moieties and optionally substituted by one or more hydroxyl groups ; or $C_2$-$C_{20}$hydroxyalkyl, and $X^3$ is $C_2$-$C_{20}$alkyl, $C_4$-$C_{20}$alkyl interrupted by one or more -O- moieties and optionally substituted by one or more hydroxyl groups; -$(CH_2)_m$-$NX^1X^2$, or $C_2$-$C_{20}$hydroxyalkyl, or in which $X^2$ and $X^3$ together are -$(CH_2)_m$-, -$C_2H_4$-O-$C_2H_4$- or -$C_2H_4$-$NX^1$-$C_2H_4$-, where m is an integer from 4 to 6, and $X^1$ and $X^2$ are as defined above;
or an aromatic amine of the formula Ia

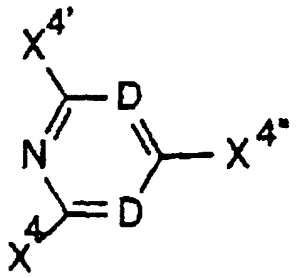

(Ia)

in which D is a nitrogen atom or a -$CX^5$- group and in which $X^4$, $X^{4'}$, $X^{4''}$ and $X^5$, independently of one another, are hydrogen or $C_1$-$C_4$alkyl;
or a cyclic sterically hindered amine of the series of the derivatives of polyalkylpiperidines or polyalkylpiperazines containing at least one group of the formula II or III

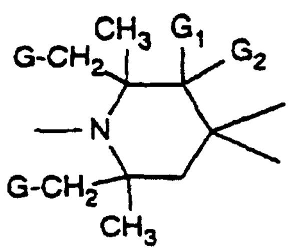

(II)

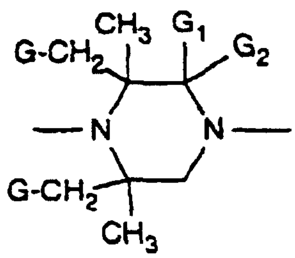

(III)

in which G is hydrogen or methyl and $G_1$ and $G_2$ are hydrogen or methyl or, taken together, are =O.

**9.** A composition according to claim 8, wherein the component (b) is a sterically hindered amine of the series of the derivatives of polyalkylpiperidines whose molecular weight or average molecular weight $M_n$ is in the range from 300 to 10 000.

**10.** The use of an organic amine (b) in combination with an acid-binding metal salt (c) as a hydrolysis stabilizer for organic phosphites or phosphonites (a) where no organic polymers are present as further components in addition to components (a), (b) and (c).

**11.** An organic phosphite or phosphonite which is stabilized against hydrolysis, obtainable in accordance with a process according to any one of claims 1 to 3.

## Revendications

1. Procédé de stabilisation d'un phosphite ou d'un phosphonite organique ou d'un mélanges de phosphites et de phosphonites organiques contre l'hydrolyse, caractérisé en ce que l'on ajoute comme stabilisant (b) une amine organique et (c) un sel métallique fixateur d'acide, de façon que le phosphite ou phosphonite stabilisé contienne 0,01 à 50 % en masse du constituant amine (b) et 0,01 à 25 % en masse du sel métallique fixateur d'acide (c) (toujours par rapport à la masse totale).

2. Procédé selon la revendication 1, dans lequel les constituants (b) et (c) sont mélangés à une solution ou à la masse fondue du phosphite ou du phosphonite avant sa cristallisation.

3. Procédé selon la revendication 2, caractérisé en ce que l'on ajoute une masse fondue, amenée à une température de 50-100°C, constituée de phosphite ou de phosphonite, d'un solvant ou d'un mélange de solvants et de 0,1 à 100 % en masse (par rapport au phosphite ou au phosphonite) d'une amine, dans laquelle sont dispersés 0,05 à 25 % en masse de sel métallique fixateur d'acide (par rapport au phosphite ou au phosphonite), dans un milieu de cristallisation liquide dont la température est maintenue pendant l'addition à 10-70°C au-dessous de la température de la masse fondue.

4. Composition contenant

   (a) 25 à 99 % en masse d'un phosphite ou phosphonite organique,
   (b) 0,01 à 50 % en masse d'une amine organique et
   (c) 0,01 à 25 % en masse d'un sel métallique fixateur d'acides,

   toujours par rapport à la masse totale de la composition, et ne contenant pas de polymère organique comme autre constituant en plus des constituants (a), (b) et (c).

5. Composition selon la revendication 4, contenant 40 à 99 % en masse de constituant (a), 0,01 à 25 % en masse de constituant (b) et 0,05 à 15 % en masse de constituant (c), toujours par rapport à la masse totale de la composition.

6. Composition selon la revendication 4, contenant comme constituant (a) un phosphite ou un phosphonite organique solide à 20°C.

7. Composition selon la revendication 4, contenant comme constituant (c) un sel métallique fixateur d'acide choisi parmi des carbonates, des bicarbonates, des carboxylates, des oxydes, des hydroxydes, des phosphites ou des borates des métaux lithium, sodium, potassium, cuivre, zinc, magnésium, calcium, strontium, baryum, aluminium et/ou zirconium, ou des composés cristallisés mixtes correspondants, comme des hydrotalcites et des zéolites.

8. Composition selon la revendication 4, contenant comme constituant (b) une amine de formule I

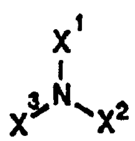

(I)

dans laquelle $X^1$ et $X^2$ représentent, indépendamment l'un de l'autre, un atome d'hydrogène, un groupe alkyle en $C_1$-$C_{20}$, un groupe alkyle en $C_4$-$C_{20}$ interrompu une ou plusieurs fois par -O- et éventuellement substitué par un ou plusieurs groupes OH, ou un groupe hydroxyalkyle en $C_2$-$C_{20}$, et $X^3$ représente un groupe alkyle en $C_2$-$C_{20}$, un groupe alkyle en $C_4$-$C_{20}$ interrompu une ou plusieurs fois par -O- et éventuellement substitué par un ou plusieurs groupes hydroxy, un groupe $-(CH_2)_m-NX^1X^2$ ou un groupe hydroxyalkyle en $C_2$-$C_{20}$, ou $X^2$ et $X^3$ forment ensemble un groupe $-(CH_2)_m-$, $-C_2H_4-O-C_2H_4-$ ou $-C_2H_4-NX^1-C_2H_4-$, où m est un nombre entier compris entre 4 et 6 et $X^1$ et $X^2$ ont la signification indiquée ci-dessus; ou une amine aromatique de formule Ia

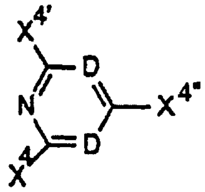

(Ia)

dans laquelle D représente un atome d'azote ou un groupe $-CX^5-$, et $X^4$, $X^{4'}$, $X^{4''}$ et $X^5$ sont indépendamment les uns des autres un atome d'hydrogène ou un groupe alkyle en $C_1$-$C_4$,

ou une amine stériquement encombrée cyclique de la série des dérivés de polyalkylpipéridines ou de polyalkylpipérazines, qui contiennent au moins un groupe de formule II ou III

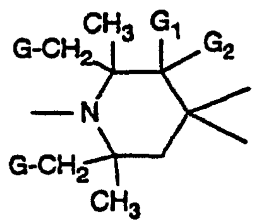

(II)

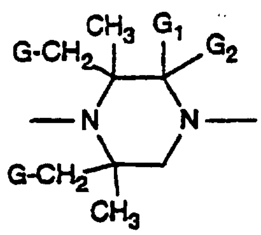

(III)

où G représente un atome d'hydrogène ou un groupe méthyle et $G_1$ et $G_2$ représentent un atome d'hydrogène ou un groupe méthyle ou forment ensemble un groupe =O.

**9.** Composition selon la revendication 8, contenant comme constituant (b) une amine stériquement encombrée de la série des dérivés de polyalkylpipéridines dont la masse molaire ou la masse molaire moyenne $\overline{M}_n$ est comprise entre 300 et 10 000.

**10.** Utilisation d'une amine organique (b) en combinaison avec un sel métallique fixateur d'acide (c) comme stabilisant à l'hydrolyse pour des phosphites ou des phosphonites organiques (a) en l'absence de polymères organiques comme autres constituants en plus des constituants (a), (b) et (c).

**11.** Phosphite ou phosphonite organique stabilisé contre l'hydrolyse, pouvant être obtenu par un procédé selon les revendications 1 à 3.